(19) Europäisches Patentamt
European Patent Office
Office européen des brevets

(11) **EP 2 814 194 A1**

(12) **EUROPEAN PATENT APPLICATION**

(43) Date of publication:
**17.12.2014 Bulletin 2014/51**

(21) Application number: **14179538.5**

(22) Date of filing: **01.06.2011**

(51) Int Cl.:
*H04L 1/00* *(2006.01)*  *H04N 21/2383* *(2011.01)*
*H04N 21/637* *(2011.01)*  *H04N 21/6405* *(2011.01)*
*H04N 21/24* *(2011.01)*  *H04N 21/236* *(2011.01)*
*H04N 21/2365* *(2011.01)*  *H04N 21/2389* *(2011.01)*
*H04N 21/266* *(2011.01)*  *H04N 21/262* *(2011.01)*
*H04N 21/2662* *(2011.01)*  *H04N 21/414* *(2011.01)*
*H04N 21/434* *(2011.01)*  *H04N 21/438* *(2011.01)*
*H04N 21/4385* *(2011.01)*  *H04N 21/475* *(2011.01)*
*H04N 21/61* *(2011.01)*  *H04N 21/63* *(2011.01)*
*H04N 21/6375* *(2011.01)*  *H04N 21/6547* *(2011.01)*
*H04N 21/84* *(2011.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2010 GB 201009135
01.06.2010 GB 201009127
01.06.2010 GB 201009128
01.06.2010 GB 201009133**

(62) Document number(s) of the earlier application(s) in accordance with Art. 76 EPC:
**11726933.2 / 2 577 976**

(71) Applicant: **Global Invacom Ltd.
Stevenage, Hertfordshire SG1 2UG (GB)**

(72) Inventors:
• **Chung-How, James
Stevenage, Hertfordshire SG1 2UG (GB)**
• **Nix, Andrew
Stevenage, Hertfordshire SG1 2UG (GB)**
• **Bull, David
Stevenage, Hertfordshire SG1 2UG (GB)**

(74) Representative: **Wood, Graham
Bailey Walsh & Co LLP
1 York Place
Leeds, LS1 2DR (GB)**

Remarks:
This application was filed on 01-08-2014 as a divisional application to the application mentioned under INID code 62.

(54) **Data transmission apparatus system and method**

(57) A method and system of transmitting video data and multimedia data to a plurality of client radio receivers over an air interface, the method comprising transmitting video data to a plurality of client radio receivers simultaneously using an adaptive encoding/transcoding scheme; and updating the adaptive encoding/transcoding scheme in dependence upon received feed-back data. A system and method is also described that includes estimating channel states and distortion levels for a plurality of transmission modes, and then selecting that transmission mode for subsequent data transmission that has the lowest distortion level. Control data items can also be extracted from the first data stream to produce a multimedia data stream and a control data stream and the multimedia data stream is transmitted over a first channel; and the control data stream is transmitted over a second channel. The received data stream may be put into a plurality of multimedia slices having a predetermined slice size; and encoded into first data packets of a first predetermined size; which in turn are divided into respective integral second data packets of a second predetermined size and which are aggregated into a stream of third data packets of a third predetermined size.

EP 2 814 194 A1

Video System Level          Video: Per Stream          QoS Client Feedback

Video GoP
Stream Number

Video Rate
Video Resolution

Packet Loss
FEC Loss Rate

Modulation
PHY FEC

FEC Block Size
FEC Rate

Unicast Feedback
from Active Clients

Server                                              Client

FIG. 1

## Description

The present invention relates to a data transmission system for the wireless transmission of data. In particular, but not exclusively, the present invention relates to an adaptive transmission system for the wireless, i.e. over an air interface, transmission of multimedia data and video streaming data to a plurality of fixed and/or mobile recipients of the data.

In one potential area of use at large venue events, such as stadium events, including pop concerts and sporting events, there is a continuing demand for "added-value" entertainment features which will attract attendees and maintain consumer interest in a crowded leisure market as well as improving the actual quality of the experience to the paying customer present at the event. The atmosphere of a live event can often be unparalleled and, as such, the popularity of the same has increased and there are now a large range of live events occurring regularly, often at conflicting times. Not only do such events compete against each other for attendees, but as home entertainment system quality has improved, the live events must also compete against the, often live, broadcasting of the event into the comfort of people's homes. For example, many top flight football and baseball games are available to view live on a subscription basis from a television broadcasting company. Typically and most frequently, for those viewers who pay the subscription, the game is available in real time, with expert commentary. Many of the television companies have multiple cameras simultaneously filming the game, from a variety of different angles and viewpoints, including close up footage of the game. Depending on the television package being used, some viewers can interactively select which camera footage they wish to watch with the aim being to give the person watching the event at home an as realistic as possible experience of watching the live event. However, in contrast, the attendees at the event are often restricted to a single viewpoint from their seat, which may be a considerable way from the pitch or stage itself and in certain instances they may have to rely on watching a large screen to discern details of the live event that they are at.

In an effort to provide more consumer value at such large stadium events, these large display screens have been used for some time, with live close up footage of the event being displayed in near to real time, along with replays of key action points interjected into the live feed as and when they arise. Until recently these systems used traditional analogue transmission techniques. However, Sony's Emirates Stadium digital high definition (HD) LCD display screens display live action in real time which is recorded, encoded and streamed over the Stadium Local Area Network (LAN). This live streamed video data can also be customised with add-on graphics and split screen display. In addition, prior to and after the main event, pre-recorded footage including behind the scenes footage and interviews, or post event analysis, can be shown on the screens. Whilst this system provides a great deal more entertainment to the audience, the output displayed to the audience is determined by an operator, with no audience interaction or choice in the video or data being viewed.

More recently, a system called Kangaroo TV has been developed which provides users with a handheld television system which enables them, at events where Kangaroo TV is being transmitted, to view live footage of the event from one of several cameras. This provides a multi-channel mobile TV experience but lacks user interactivity and provides no accompanying data service. Along similar lines is YinzCam which, at chosen live events, provides live footage which can be viewed on an attendee's individual hand held device or on touch screen in-suite displays provided around the stadium. Whilst these systems both provide users with entertainment options approaching those available to home viewers, there are limitations on the services provided by these systems.

In particular, such existing video distribution systems have been developed based on unicast, (transmission to a single intended recipient), transport protocols and/or cross packet forward error correction (FEC) codes (i.e. erasure codes), and fixed video bit rates. These fixed systems are not adaptive, do not scale for multicast delivery, and must be designed for the worst case environment and crowd scenario. As they do not trade off the cross packet FEC rate against the video rate dynamically based on the client packet loss seen for a given installation and at a given time, they are not able to provide the best trade off between data efficiency and video quality to viewers. These fixed solutions also fail to maximise the number of video channels that can be sent since they cannot adapt the video rate to the available wireless multicast throughput rate. Furthermore, they cannot adjust to deliver a given number of video streams by reducing the bit rate per stream and are unable to guarantee coverage and performance as they do not adapt if packet loss, or FEC decoding errors, are observed by the client.

Internet Protocol television (IPTV) has also seen the development of a number of near-live TV systems. For example, transmission systems exist which enable a user to watch live baseball on their mobile phone using a unicast Wi-Fi link. In this case a TCP protocol is used to provide unicast delivery to the mobile terminal and packet errors are overcome via MAC layer (Wi-Fi) and transport layer (TCP) packet retransmission. However, this type of transmission system does not scale up well to provide a robust multicast delivery systems since, in the case of a multicast event, the lack of packet retransmission, especially over the wireless link, renders the transmitted video stream prone to very severe video distortion. Furthermore, most wireless Access Points (APs) fail to reliably deliver a smooth stream of multicast packets, especially at higher input data rates, for input streams with large amounts of timing jitter, and if simultaneously sending multicast and unicast data.

Current systems of this type are based on User Datagram Protocol (UDP) or Transmission Control Protocol (TCP), neither of which can support the scaling of transmission to reach tens of thousands of clients within a local venue. UDP guarantees low packet delivery latency, but this occurs at the expense of packet error rate. UDP is an unreliable protocol with no end-to-end handshaking which means features, such as transmission rate adjustment, need to be achieved using a higher layer proprietary protocol. UDP (often together with the Real Time Protocol, RTP) is however used for many real-time applications, with one well known example being SKYPE. TCP is very commonly used for video streaming and for almost all data distribution, i.e. File Transfer Protocol (FTP). TCP is very convenient for application developers to use as TCP insists on delivering all the packets to all the clients, therefore application developers do not need to worry about how to deal with missing packets. The problem with TCP is the unicast link to the wireless clients (which does not scale), and the throughput variations and variable delays that are caused by unreliable wireless delivery channels. TCP insists on delivering all the packets to all the clients, and over poor wireless channels the retransmission rates and transmission backoff can severely lower the throughput to the point where the video "locks up", resulting in video "rebuffering".

For interactive services, where the clients interact regularly with the server, a TCP protocol is inappropriate. Instead, a UDP (for a small numbers of clients) or multicast (for a larger number of clients) protocol is necessary. In a stadium application "live" video streams may typically be delayed by up to 15 seconds. However, even in this case it is not possible to use TCP in the server since there are no client return paths (for TCP packet retransmission and rate adaptation) over a multicast wireless link. One existing solution is to replace TCP with multicast delivery and to use cross packet erasure codes to 'recreate' the missing packets. This approach can work, but there are many other issues that also need to be addressed. These include video structure, packet flow into the wireless Access Point, packet buffering, video packetisation, FEC rate adaptation, modulation and coding rate adaptation, client quality feedback, channel metadata distribution, and video stream presentation in the client players.

Previously-considered approaches are generally not suitable for low latency video applications as they do not take into account the nature of the transmitted data, and they are primarily designed to provide the highest throughput without regard for delay and retransmission.

A further problem which is experienced is in the transmission of the audio and/or video media data, from a server to one or more end users using the streaming application, and the attempt to maximise the quality of the media output presented to the end user, which is a high priority in order to provide a service which is usable by the client. However, when bandwidth is limited, it can be difficult to guarantee quality of service, particularly if the network over which the data are being transmitted is unreliable, such as may be the case for example in a Multicast system.

It is common for an MPEG-2 Transport Stream to be used as a digital container for transporting media data streams over network systems. An MPEG-2 Transport Stream consists of encapsulated Packetized Elementary Streams (PES) which contain the media data streams. Each Transport Stream is provided with data control mechanisms which ensure the audiovisual content of the data being transmitted by the Transport Stream is synchronised when presented on an end user's display device. The Transport Stream also contains configuration data, such as Program Specific Information (PSI), Program Association Table (PAT), Program Map Table (PMT), Conditional Access Table (CAT), and Network Information Table (NIT)

The video and audio data content within a Transport Stream is typically compressed using a high performance coder-decoder (codec), for example H.264, which is a standard for video compression, and advanced audio coding (AAC), a standard for audio compression. The codec reduces the amount of data that needs to be transmitted to a display device, therefore optimising bandwidth whilst maintaining the same quality of service. Configuration data, such as encoder settings that the decoder needs in order to successfully uncompress the data associated with the codec, must also be provided to the display device. The H.264 standard, for example, encapsulates this information within Sequence Parameter Sets which apply to the decoding of coded video sequences, and Picture Parameter Sets which apply to the decoding of one or more individual pictures within the coded video sequence.

The codec configuration data changes relatively infrequently, for any given media stream. In view of this, the H.264 standard recommends that when the network over which the media data are being transmitted is reliable, the bandwidth can be preserved by sending the codec configuration data at an appropriate frequency, out-of-band, e.g. separately from the media content data. However, no mechanism is available for out-of-band transmission of codec configuration data in general, or in other less favourable circumstances such as when the network is unreliable. In addition, whilst the transport stream configuration data for any given media stream changes relatively infrequently, no mechanism is available for out-of-band transmission of transport stream configuration data.

A yet further problem which is experienced is in the transmission of video generally, and including the transmission of video in multi cast systems, is that video media data can be sizeable and require compression to enable more effective and efficient data delivery.

One conventional video transmission system B is shown in Figure A. The system B consists of a transmitting server C and a receiving client D. The server C comprises a video encoder E, a formatting multiplexer F, and a transmitter G. The client D comprises a receiver H, a formatting demultiplexer I and a video decoder J.

The encoder E, in this case H.264 which is a standard for video compression, receives input video media data and generates a compressed video bit stream consisting of variable size chunks at the application layer of the server C. The variable size chunks of compressed video are then packaged by formatting multiplexer F which aggregates and/or fragments them into a suitable container format, in this case an MPEG-2 Transport Stream as specified in ISO-IEC 13818-1. The Transport Stream is then encapsulated by subsequent protocol layers such as the transport and network layers, before being provided to transmitter G for transmission over the network, which may be unreliable.

The receiving client D receives the transmitted data at receiver H which is then formatted and demultiplexed by formatting demultiplexer I into a bit stream of variable size slices which is provided to the video decoder J to be returned to video media data for provision to a display device (not shown). The transport stream data is generally transmitted over a network by the physical layer in the form of data packets known as Physical layer Protocol Data Units (PPDUs). If the network is unreliable, PPDUs can be lost or received with errors. Therefore the video bit stream obtained by the receiver D may be incomplete or incorrect. It is desirable to limit the effect of a missing or corrupted PPDU on the reconstructed video media data at the client receiver D.

Video encoders, such as video encoder E which is in this case H.264, use video compression algorithms. The video compression algorithms exploit the spatial and temporal redundancy between the individual pixel values within a raw video signal and produce a video bit stream that is a more compact representation of the original raw video signal. Such a video bit stream is very sensitive to loss or errors in the bit stream and distortion due to loss or errors will generally propagate spatially and temporally.

State-of-the-art video coding standards, such as the H.264 standard, generally partition the compressed video bit stream into self-contained chunks. In the H.264 standard, a slice is a portion of the bit stream that is self-contained in the sense that if the active sequence parameter set (SPS) and picture parameter set (PPS) are known, the syntax elements within a slice can be parsed from the bit stream and the values of the samples in the area of the picture that the slice represents can be decoded without the use of data from other slices, provided that the previously decoded pictures referenced by the slice are available at the decoder. Slices are typically used to limit the extent of error propagation, and thus increase robustness to loss of data. However, the robustness to loss of data also depends on how slices are fragmented and/or aggregated by the subsequent protocol layers prior to transmission.

A good system solution must aim to minimise the bandwidth utilisation of the network while at the same time providing good video quality and robustness to loss of compressed video media data.

An object of the present invention is to obviate or mitigate at least one, or any combination, of the aforementioned problems.

According to a first aspect of the invention there is provided a method of transmitting multicast video data to a plurality of client receivers, the method comprising transmitting video data to a plurality of client receivers simultaneously using an adaptive transmission scheme, receiving unicast feedback data from at least one client receiver, the feedback data including feedback information relating to received video data at the client receiver, updating the adaptive transmission scheme in dependence upon received feedback data, transmitting subsequent video data to the plurality of client receivers using the updated adaptive transmission scheme.

The provision of unicast feedback obtained from at least one client within the network enables adaptive video encoding or transcoding which results in optimisation of a variable data rate and resolution of the video for multicast distribution. This feedback also adopts the FEC erasure code rate for video independently of that for the multimedia data.

The adaptive transmission scheme may include at least one or any combination of, an adaptive encoding/transcoding scheme, an adaptive modulation scheme, and/or an adaptive cross packet forward error correction scheme.

Preferably, the unicast feedback is received from a predetermined subset of the plurality of client radio receivers. The unicast feedback may be received from each of the plurality of client radio receivers.

The provision of feedback from multiple clients enables refinement of the optimization of the multimedia data streams for transmission.

The adaptive transmission scheme may include at least one, or any combination of: adaptive video rate, cross-packet FEC rate, and/or video structure. The feedback information may include information relating to at least one, or any combination, of: packet loss rate and/or cross packet forward error correction decode error rate. Inclusion of these parameters in the feedback improves optimization and adaptation of the data to be transmitted to reflect current system performance.

Preferably, the multimedia data and video data are transmitted using a modulation scheme wherein the modulation scheme is modified in dependence upon received feedback data. The modulation scheme is preferably a wireless local area network (LAN) multicast modulation scheme.

Such a method may also include transmitting multimedia data, different to the video data, using a second adaptive transmission scheme, the second adaptive transmission scheme being adapted in dependence upon the received feedback data.

Such a method enables a separate data path to be provided in a multicast environment.

The second adaptive transmission scheme may include at least one, or any combination, of an adaptive encoding/transcoding scheme, an adaptive modulation scheme, and/or an adaptive cross packet forward error correction scheme.

The second adaptive transmission scheme may include at least one, or any combination, of adaptive video rate, cross-packet FEC rate, and/or video structure, and the feedback information may include information relating to at least one, or any combination of: packet loss rate and/or cross packet forward error correction decode error.

According to a second aspect of the invention there is provided a wireless multicast video data transmission system comprising a transmitter operable to transmit video data to a plurality of client receivers simultaneously using an adaptive transmission scheme, and a receiver operable to receive unicast feedback data from at least one client receiver, the feedback data including feedback information relating to received video data at the client receiver concerned, wherein the transmitter is operable to update the adaptive transmission scheme in dependence upon received feedback data, and to transmit subsequent video data to the plurality of client receivers using such an updated adaptive transmission scheme.

The provision of unicast feedback obtained from a client within the network enables adaptive video encoding or transcoding which results in optimisation of at least one, or any combination, of: video data rate, cross packet forward error correction rate, wireless modulation and coding scheme, and/or video resolution for multicast distribution to the clients.

The adaptive transmission scheme may include at least one, or any combination, of an adaptive encoding/transcoding scheme, an adaptive modulation scheme, and/or an adaptive cross packet forward error correction scheme.

Preferably, the unicast feedback is received from a predetermined subset of the plurality of client radio receivers. The unicast feedback may be received from each of the plurality of client radio receivers.

The adaptive transmission scheme may include adaptive video rate, cross-packet FEC rate, and video multimedia data structure, and the feedback information may include information relating to packet loss rate and cross packet forward error correction decode error rate. Preferably, the video data are transmitted using a modulation scheme, and wherein the modulation scheme is modified in dependence upon received feedback data.

The transmitter may also be operable to transmit multimedia data, different to the video data, using a second adaptive transmission scheme, the second adaptive transmission scheme being adapted in dependence upon the received feedback data.

Such a system enables a separate data path to be provided in a multicast environment.

The second adaptive transmission scheme may include at least one, or any combination, of an adaptive encoding/transcoding scheme, an adaptive modulation scheme, and/or an adaptive cross packet forward error correction scheme.

The second adaptive transmission scheme may include at least one, or any combination, of: adaptive video rate, cross-packet FEC rate, and/or video structure, and the feedback information may include information relating to at least one, or any combination, of: packet loss rate, and/or cross packet forward error correction decode error rate.

According to another aspect of the present invention, there is provided a method of decoding a received wireless multicast video data stream, the method comprising receiving a wireless multicast video data stream, converting a received wireless multicast data stream to multicast video data, converting such multicast video data into unicast format video data, and decoding such unicast format video data into a video display driver signal.

According to another aspect of the present invention, there is provided a device for receiving a wireless multicast video data stream, the device comprising a receiver unit operable to receive a wireless multicast video data stream, and to output multicast video data, a data processor operable to receive multicast video data from the receiver unit and to output unicast format video data, a video decoder operable to receive unicast format data from the data processor, and to output a video display driver signal relating to such received unicast format data.

Such a method and device enables a standard unicast video decoder/display driver to be used with a multicast video stream transmission.

According to another aspect of the present invention, there is provided a method of transmitting a wireless multicast video data stream to a plurality of receivers, the method including removal of periodically repeated information from the video stream, and the transmission of such removed information separately from the video stream.

According to another aspect of the present invention, there is provided a method of transmitting wireless multicast video data stream to a plurality of receivers, the method including transmitting multimedia data, different from the video data stream, to the receivers separately from the video data stream.

According to another aspect of the present invention, there is provided a method of receiving a wireless multicast video data stream transmitted in accordance with such a method, the receiving method including selecting multimedia data for display in dependence upon comparison of metadata relating to the multimedia data with preference information for the receiver concerned.

According to a further aspect of the present invention, there is provided a method of transmitting multicast data to a plurality of receivers over a transmission channel, the method comprising transmitting multicast data to a plurality of receivers over a transmission channel using a first transmission mode, estimating a channel state for the transmission channel for the first transmission mode to produce a first channel estimate, estimating rate distortion for the transmission channel for the first transmission mode using the first channel estimate to produce a first distortion estimate, estimating a channel state for the transmission channel for a second transmission mode, different to the first transmission mode, to produce a second channel estimate, estimating rate distortion for the transmission channel for the second transmission mode using the second channel estimate to produce a second distortion estimate, selecting, as a selected transmission mode, that transmission mode from the first and second transmission modes which has the lowest corresponding distortion estimate, and transmitting multicast data to the plurality of receivers over the transmission channel using the determined transmission mode.

According to another aspect of the present invention, there is provided a system for transmitting multicast data to a plurality of receivers over a transmission channel, the system comprising a transmitter operable to transmit multicast data to a plurality of receivers over a transmission channel using a first transmission mode, a channel state estimator operable to estimate a channel state for the transmission channel for the first transmission mode to produce a first channel estimate, and operable to estimate a channel state for the transmission channel for a second transmission mode, different to the first transmission mode, to produce a second channel estimate, a distortion estimator operable to estimate rate distortion for the transmission channel for the first transmission mode using the first channel estimate to produce a first distortion estimate, and operable to estimate rate distortion for the transmission channel for the second transmission mode using the second channel estimate to produce a second distortion estimate, and a rate selector operable to select, as a selected transmission mode, that transmission mode from the first and second transmission modes which has the lowest corresponding distortion estimate, wherein the transmitter is operable to transmit subsequent multicast data to the plurality of receivers over the transmission channel at the selected transmission mode.

Such a method and system enable the transmission mode to be chosen in dependence upon current prevailing channel conditions, and so can enable increased transmission quality, and hence video output quality. The transmission mode is preferably a modulation and coding selection (MCS) mode.

Such a technique may also include estimating a channel state for the transmission channel for a third transmission mode, different to the first and second transmission modes, to produce a third channel estimate, and estimating rate distortion for the transmission channel for the third transmission mode using the third channel estimate to produce a third distortion estimate, wherein selecting a transmission mode comprises selecting, as a selected transmission mode, a transmission mode from the first, second, and third transmission modes that has the lowest corresponding distortion estimate.

Considering a third transmission mode enables the system to have another option for subsequent data transmission.

In such a case, the second transmission mode may have a data rate lower than that of the first transmission mode and the third transmission mode may have a data rate higher than that of the first transmission mode.

A distortion model for the transmission channel may be determined, which distortion model relates to channel distortion for different transmission modes. Such a distortion model provides one method for the estimation of end-to-end distortion for the transmission channel.

The distortion model for the transmission channel may use mean square error values between original and received data values, and may include estimates of encoding distortion, and channel distortion.

The multicast data includes multimedia data, such as video data.

According to a yet further aspect of the invention there is provided a method of transmitting multimedia data from a transmitter to a receiver via a transmission means, the method comprising:

   receiving a first data stream comprising multimedia data items and control data items;
   extracting the control data items from the first data stream to produce a multimedia data stream and a control data stream; transmitting the multimedia data stream to a receivers over a first channel; and
   transmitting the control data stream to the receiver over a second channel different to the first channel,
   wherein the first and second channels are in-band or out of band.

In one embodiment the transmission means is an air interface having a predetermined bandwidth. In one embodiment the first channel is an in-band channel and the second channel is an out-of band channel.

The transmission of control data using a different channel from that used for multimedia data transmission enables optimisation of bandwidth use whilst maintaining the quality of transmitted data.

Conveniently the method may further comprise; receiving a multimedia data stream on a first channel; receiving a control data stream on a second channel different to the first channel; and combining the received multimedia data stream and the received control data stream, to produce an output stream, wherein the first channel may be an in-band channel of the transmission means, and the second channel may be an out-of-band channel.

The receiving of control data on a second channel, different from the first channel for the receipt of multimedia data, enables minimisation of reception of unnecessarily repeated control data thus optimising bandwidth usage for the transmission of multimedia data. The second channel may be a session announcement protocol channel.

Conveniently the control data stream includes transport stream data items which may include data items relating to one or more of program specific information, program association table information, program map table information, conditional access table information and network information table information.

These transport stream data items will change infrequently therefore their inclusion in the control data stream will minimise transmission of unnecessarily duplicated data.

Conveniently, the control data stream includes codec configuration data items which may relate to one or more of encoder settings information, sequence parameter sets information and picture parameter sets information. The codec configuration data will change infrequently therefore their inclusion in the control data stream will minimise transmission of unnecessarily duplicated data.

According to a further aspect of the invention there is provided apparatus for transmitting multimedia data to a receiver over a transmission means having a predetermined bandwidth, the apparatus comprising an input unit operable to receive a first data stream comprising multimedia data items and control data items; an extraction unit operable to extract control data items from a first data stream to produce a multimedia data stream and a control data stream; a transmitter operable to transmit a multimedia data stream to a receiver over a first channel, and to transmit a control data stream to that receiver over a second channel different to the first channel, wherein the first and second channels may be in-band or out of band channels of the transmission means.

Apparatus which enables transmission of control data using a different channel from that used for multimedia data transmission enables optimisation of bandwidth use whilst maintaining the quality of transmitted data.

According to a further aspect of the invention there is provided apparatus for receiving multimedia data from a transmitter over an air interface having a predetermined bandwidth, the apparatus comprising a receiver operable to receive a multimedia data stream on a first channel, and to receive a control data stream on a second channel different to the first channel; and a combining unit operable to combine a received multimedia data stream and a received control data stream, to produce an output stream, wherein the first channel is an in-band channel of the air interface, and the second channel is an out-of-band channel.

The provision of apparatus which receives control data on a second channel, different from the first channel for the receiving of multimedia data enables minimisation of reception of unnecessarily repeated control data thus optimising bandwidth usage for the transmission of multimedia data. The second channel may be a session announcement protocol channel.

Conveniently, the control data stream includes transport stream data items which may include data items relating to one or more of program specific information, program association table information, program map table information, conditional access table information and network information table information.

The control data stream may include codec configuration data items which may relate to one or more of encoder settings information, sequence parameter sets information and picture parameter sets information.

According to another aspect of the present invention, there is provided a method of transmitting a multimedia datastream over a transmission channel, the method comprising receiving a multimedia datastream, slicing the received datastream into a plurality of multimedia slices having a predetermined slice size, encoding the multimedia slices into first data packets of a first predetermined size dividing each of the first data packets into a respective integral number of second data packets of a second predetermined size, aggregating the second data packets into a stream of third data packets of a third predetermined size, each third data packet containing all of the second data packets relating to a single one of the first data packets, and transmitting the series of third data packets over a transmission channel.

In one embodiment, the method further comprises the step of encoding the first data packets into respective encoded first data packets of a predetermined size before dividing each of the first data packets into a respective integral number of second data packets, each such encoded first data packet including all of the first data packets relating to a single one of the multimedia slices.

The method may further comprise the step of encapsulating the third data packets into respective encapsulated third data packets of a predetermined size, before transmitting the series of third data packets over a transmission channel.

According to a further aspect of the present invention, there is provided apparatus for transmitting a multimedia datastream over a transmission channel, the apparatus comprising an input unit operable to receive a multimedia datastream, a slicing unit operable to slice a received datastream into a plurality of multimedia slices having a predetermined slice size, a first encoder operable to encode such multimedia slices into first data packets of a first predetermined size, a divider operable to divide or fragment each such first data packet into a respective integral number of second data packets of a second predetermined size, an aggregation unit operable to aggregate such second data packets into a stream of third data packets of a third predetermined size, each third data packet containing all of the second data packets relating to a single one of the first data packets, and a transmitter operable to transmit such a series of third data packets over a transmission channel.

The apparatus may further comprise a second decoder operable to encode such first data packets into respective encoded first data packets of a predetermined size, each encoded first data packet including all of the first data packets relating to a single one of the multimedia slices.

The apparatus may further comprise an encapsulation unit operable to encapsulate the third data packets into respective encapsulated third data packets of a predetermined size.

The predetermined slice size may be chosen such that the predetermined size of a transmitted third data packet is not greater than a permitted maximum size for the transmission channel. In such a case, the predetermined size of a transmitted third data packet may be substantially equal to the permitted maximum size for the transmission channel.

Each encapsulated third data packet may include a single third data packet.

Aggregation of second data packets into third data packets may include applying a forward error correction scheme to the second data packets, and may include forward error correction data in the third data packets.

The second data packets may be grouped into blocks, and the forward error correction scheme may be applied to all of the second data packets in a block.

The forward error correction data may include forward error correction repair symbols.

It will be readily appreciated that the techniques embodying the present invention are applicable to compressed and uncompressed data streams, and are applicable to a wide range of compression algorithms and container formats.

It should also be appreciated that while the description of the problems given above, and examples provided subsequently, refer to relatively large scale multicast transmission systems, the aspects of the invention are also of use in relation to relatively smaller multicast systems such as may be the case for example in a block of apartments, or an office block, or organisation, or different rooms of a domestic premises in which each or a number of intended recipients are to receive a video and/or audio transmission. The description and features described herein should therefore be appreciated and interpreted as being applicable to these relatively small scale multicast transmission systems. In one embodiment the multicast system may be provided to be available in conjunction with conventional broadcast data transmitting and/or receiving systems and be selectable by the users as and when required. Furthermore the multicast data, in for example a domestic premises, could be generated along with metadata from a number of tuners provided in a set top box or broadcast data receiver provided at the premises and/or an IPTV server and then broadcast and made available to a number of users in the premises via, for example, a mobile device with a display screen and via which the users can access the multicast data at their location in the premises.

It should also be appreciated that a number of different aspects of the invention are described herein and said aspects may be used independently and to benefit in improving the apparatus, system and method of transmission of video and/or audio and may also be used to benefit by combining one or more of the aspects together in relation to the apparatus, system and/or method and it is intended that the aspects and features described herein can be used in combination and not only independently.

These and other aspects of the present invention will be more clearly understood from the following description and, by way of example only, and with reference to the following figures, in which:

Figure A illustrates schematically a conventional video transmission system;

Figure 1 is a schematic diagram of a server client adaptation according to an aspect of the present invention;

Figure 2 is a schematic diagram of a wireless multicast data network according to a first embodiment of the invention;

Figure 3 is a schematic diagram of a transmission part of the network of Figure 2;

Figure 4 is a schematic diagram of a client device of the network of Figure 2;

Figure 5 is a schematic diagram of a forward correction error mechanism for use in the transmission system of Figure 2;

Figure 6 is a schematic diagram of a transmission system embodying a further aspect of the present invention;

Figure 7 is a flowchart illustrating steps in a method embodying another aspect of the present invention;

Figure 8 is a schematic diagram of a further aspect of the invention in which there is shown a network in which a data transmission mechanism according to the present invention may be implemented;

Figure 9 is a schematic diagram of a server having a server data transmission mechanism according to a first embodiment of the present invention;

Figure 10 is a schematic diagram of a client having a client data transmission mechanism according to a first embodiment of the present invention operable to receive data from the server of Figure 9;

Figure 11 is a schematic diagram of server having a server data transmission mechanism according to a further embodiment of the aspect of the invention depicted in Figure 8;

Figure 12 is a schematic diagram of a client having a client data transmission mechanism according to a further embodiment of the present invention operable to receive data from the server of Figure 11;

Figure 13 illustrates a schematic diagram of a video transmission system in which an error resilience mechanism according an embodiment of the present invention is implemented; and

Figure 14 illustrates a block diagram of an embodiment of the server error resilience mechanism implemented in the system of Figure 13.

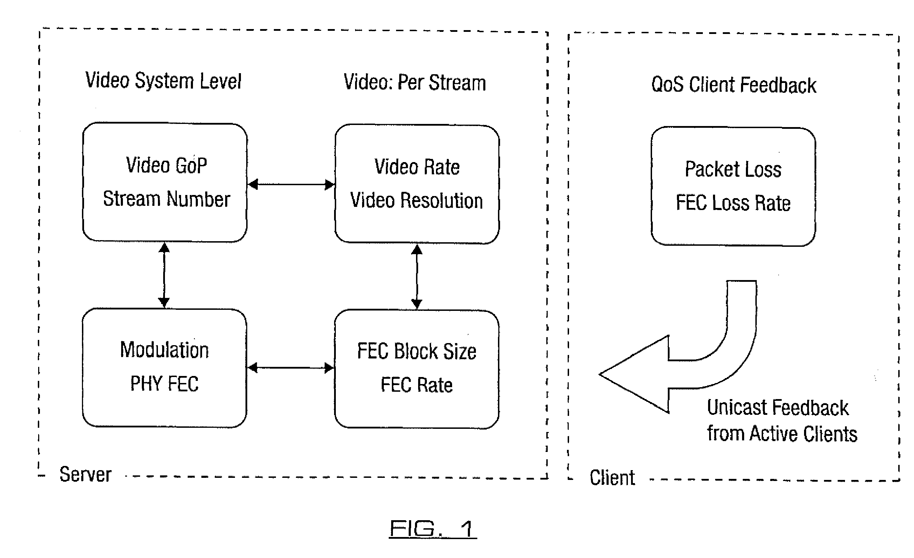

Referring now to Figure 1 there is shown the concept of server-client adaptation for multicast distribution systems. Active client devices (which can be mobile or fixed) extract quality of service information from the received multicast streams, and send this information as feedback information back to the server as a unicast transmission. The feedback information is then used to form a statistical error surface, which is used in the adaptation of global stream parameters, such as video format structure, stream number, and wireless modulation and coding scheme. Local stream parameters can also be adjusted, such as video rate and resolution, and the cross packet FEC rate and block size. Parameters can be adjusted independently to allow quality to be mapped as required to particular video channels. Statistical multiplexing can also be supported, where video rates are set dynamically for each video data stream.

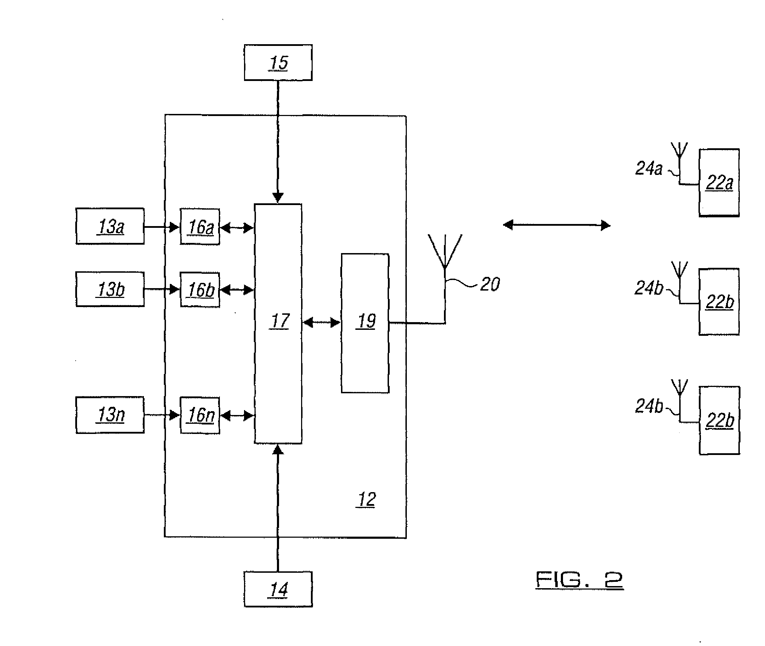

Figure 2 illustrates a wireless multicast network which embodies various aspects of the present invention, and comprises a server 12 to which are connected a plurality of video data sources 13a...13n, an operator data input device 14, and a data source 15, such as a database of, for example, pre-recorded video, audio, or text.

The server 12 comprises a plurality of encoder units 16a...16n connected to receive video data from respective ones of the video data sources 13a...13n. The server 12 also includes a controller 17 which is connected to receive encoded data from the encoders 16a...16, to receive control data from the input device 14, and multimedia data from the database 15.

The server 12 includes a wireless transceiver 19 connected to receive data from the controller 17, and operable to output that data, via an antenna 20, as radio frequency signals over an air interface 21. The wireless transceiver 19 may be provided by one or more wireless transceivers. Typically tens of transceivers (access points) will be used to cover a stadium or other venue. A plurality of client devices 22a...22m, each of which is provided with a wireless transceiver 24a...24m, communicate with the server 12, and receive data 25 transmitted from the wireless transceiver(s). In embodiments of the present invention, the data transmitted by the server 12 is multicast to all of the client devices 22a...22m using a single modulation and coding scheme (MCS), compressed at a target bit rate ki bits/second. In cases where clienti experiences different channel conditions to clientj ($i{\neq}j$), due to different packet error rates (PER), it may be advantageous to modify the MCS mode by changing the error control coding and/or modulation mode.

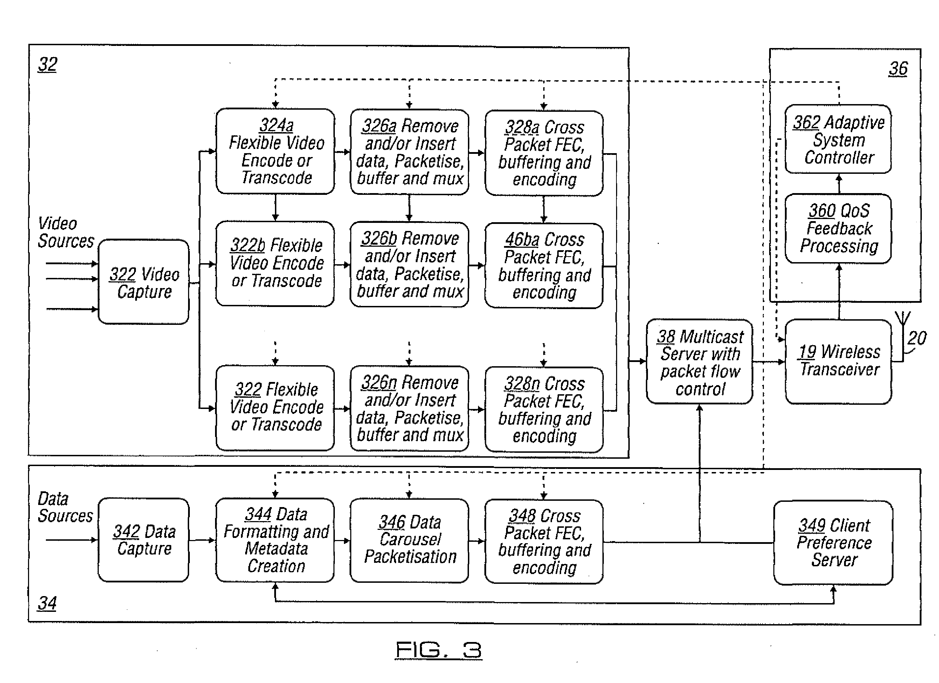

Figure 3 illustrates the transmission part of the system of Figure 2 in more detail. The transmission part includes a video subsystem 32 (provided by the encoder units 16a...16n of Figure 1), a data subsystem (equivalent to the data unit 15 in Figure 1), and an adaption subsystem 36 (provided by the controller 17 in Figure 1). A multicast server 38 (provided by the controller 17 in Figure 1) is connected to provide an output data stream to the wireless transceiver 19.

The video subsystem 32 comprises a video capture unit 322, a plurality of video encoders 324a...324n, a plurality of first video data processing units 326a...326n, a plurality of second video data processing units 328a...328n.

The video capture unit 322 is connected to receive input video data from the video data sources 13a-13n. The video capture unit 322 then outputs that video data to corresponding video encoder units 324a...324n. Feedback data are also input into the video encoder units 324a...324n from the adaption subsystem 36 as will be described in more detail below.

Each video encoder unit 324a...324n may be a flexible video encoder, or may alternatively be a flexible video transcoder. Each video encoder unit 324a...324n implements adaptive video bit rate, resolution, and structure encoding on the arriving video stream data by creating multiple video data slices, in which each slice is of a fixed byte size. The fixed slice size takes account of the packet header overhead required for the various transport protocols.

Each video encoder unit 324a...324n then passes encoded video data to a corresponding first video data processing unit 326a...326n which also receives feedback data from the adaption subsystem 36. A video encoder unit 326a...324n removes redundant data from the encoded video slice data, before undergoing packetisation, buffering and multiplexing. The redundant data removed by the first video data processing unit 326a...326n can include periodically repeated information within the input video data streams.

Each first video data processing unit 326a...326n then passes processed data to a corresponding second video data processing unit 328a...328n, which also receives feedback data from the adaption subsystem 36. The received data undergoes cross packet adaptive forward error correction (FEC) using erasure encoding, buffering and further encoding. The further encoded data output from each second data refinement unit 328a...328n is then forwarded to the multicast server 38 which implements packet flow control upon such received data packets.

The server 38 then outputs data packets to the wireless transceiver 19 for transmission to client units via the antenna 20.

Content analysis and statistical multiplexing of input video streams within the video subsystem 32 maximises channel number, video quality and/or FEC rate for the data being transmitted by the server 18.

The data subsystem 34 operates in parallel to the video subsystem 32, and 15 comprises a data capture unit 342, a data formatting unit 344, a data carousel unit 346, an encoder unit 348, and a client preference server 349.

The data capture unit 342 acquires multimedia data that is to be made available to the multicast clients. This multimedia data may include HTML files (for example, team information, stadium information etc), audio files, video clips, and game statistics. High bandwidth items are compiled to be sent via a data carousel, whilst timely low bandwidth information (for example, late breaking scores or in-game information) is sent to the first data processing units 326a...326n of the video subsystem 32 for delivery to the clients via a parallel data stream.

The process of compressing and restructuring the data for transmission over the data carousel is performed by the data formatting unit 344. In practice, two or more data carousels may be used (one comprising the full data set, and others comprising updates or specific data subsets). Metadata (data about the data) is also created to allow the dataset to be searched manually, via a client browser, or automatically via the client preference server 349. The combination of data and metadata allows information of interest to specific clients to be presented to their users. Data to be delivered using the data carousel method is transmitted to the client devices for local storage thereon. The client device is then able to access the data when required without the need for a unicast data request and data delivery scheme. The data carousel technique is particularly suitable for data that changes infrequently.

The data carousel unit 346 packetises the data generated by the data formatting unit 344, into a form suitable for cross packet FEC encoding.

The encoder unit 348 is independent of the video FEC encoders, and operates with flexible coding rate and block size parameters. These parameters are defined manually, or via the adaption subsystem 36, based on channel, environment and latency issues. For more challenging radio channels, a lower FEC rate and/or a larger block size may be used.

The client preference server 349 maintains personal profile information for all active clients on the system (i.e. connected to any distribution AP). The information may include name and address, current location (i.e. seat number), billing information (for product purchases), and personal preferences (favourite teams, players etc.). Metadata from the data formatting unit 344 is cross referenced periodically against the information in the client preference server to determine if client specific alerts or information should be provided. The client preference server 349, in combination with the data formatting unit 344 allows the system to provide a personalised service to all clients over a multicast distribution network.

The inclusion of per-client preference information with video and database metadata automatically enables relevant content to be displayed on a client device 322a-322n. The availability of personalised content can be indicated in a number of ways at the client device. For example, the user of a client device may be alerted that the content has become available, the content may be displayed automatically, or the content may be presented to the user in response to a specific user request.

The client user interface provides the user with the ability to publish their preferences and interests to the client preference server 349, which can then cross reference these interests against metadata. If a match is found, an alert can be sent, via the data carousel, or via a parallel data stream (using a proprietary session announcement protocolsession announcement protocol) in the video subsystem 32 to inform the user of the relevant update, data, or video stream. This provides the user with the appearance of a personalised service. The adaption subsystem 36 comprises a quality of service feedback processing unit 360, which receives short unicast packets from the active client device group. This data is generated periodically by each client device 322a...322n, and provides feedback information including items such as signal quality, packet loss rate, and FEC decoder loss rate. The data from all the clients is combined to form an adaptive error surface. This is then used to determine key parameter changes, such as FEC rate, block size, and AP MCS mode. The use of unicast group feedback combined with multicast distribution provides a robust, self-adapting and scaleable video and data distribution solution for tens of thousands of fixed or mobile clients.

An adaptive system controller 362 interfaces with the encoder unit 324a...324n, and the wireless transceiver 19 adjust system parameters dynamically "on-the-fly", based on the quality of service feedback data processed by the processing unit 360.

The multicast server 38 is responsible for sending the video and multimedia data multicast packets to the client devices via the wireless transceiver 19, and includes intelligent packet flow control to ensure that packets sent to the transceiver 19 via Ethernet are not lost in the transceiver's limited input buffer. The transceiver 19 must support multicast and unicast traffic. To achieve this, multicast transmissions are limited to specific signalling periods. Since the transmission of the multicast packets is inherently bursty in nature, careful packet flow and smoothing is required to avoid dropped packets and to achieve smooth video playback.

The server 38 is able to connect to any number of wireless transceivers 19 (one is shown in Figure 2 for the sake of clarity), as determined by the required coverage and capacity. Each transceiver sends the same set of multicast packets to the client devices. The transceivers support a mixture of unicast and multicast data. Unicast is used for standard wireless LAN services, including over the top applications like betting and electronic shopping. To ensure full functionality, the wireless transceivers allow the modulation and coding scheme (MCS) for multicast traffic to be set remotely via Ethernet (or equivalent) by the adaption subsystem 36.

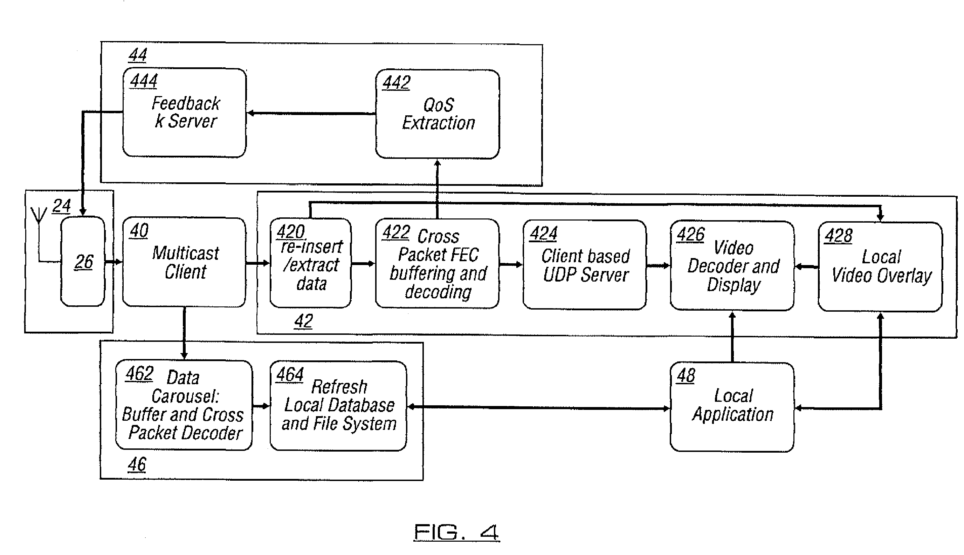

Figure 4 shows a block diagram of a client device 22a...22n, which includes the wireless transceiver 24. In addition, the client device includes a multicast client unit 40, a video subsystem 42, an adaption subsystem 44, a data subsystem 46, and a local application 48.

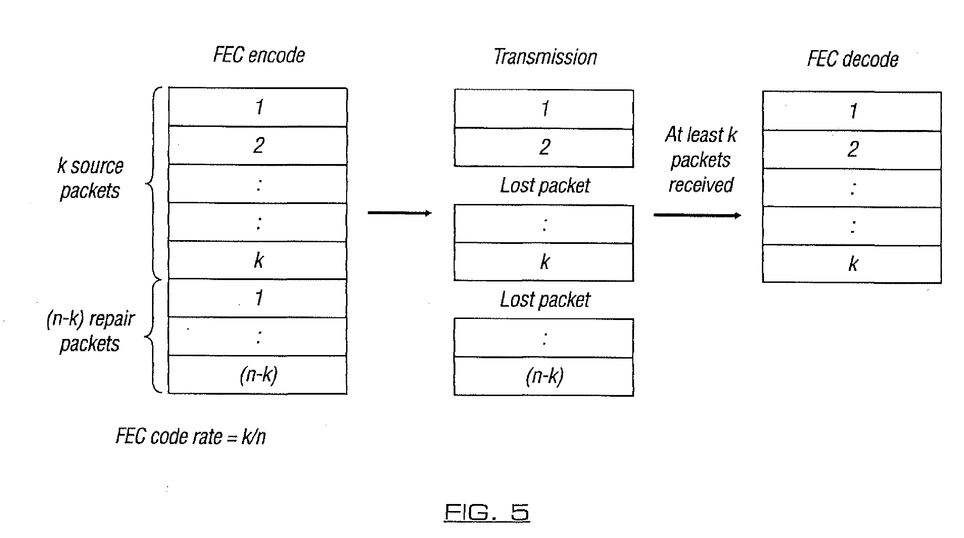

The video subsystem 42 includes a first data processor 420 which is operable to reinsert the redundant data (required by the standard video player) that was removed (to save bandwidth) by the first data processing unit 326a...326n of the video subsystem 32 of the transmission system. The first data processor 420 also extracts information conveyed in the parallel data stream. A schematic representation of the mechanism which implements the FEC encode and redundant data removal and replacement is shown in Figure 5.

A decoder unit 422 extracts and buffers received FEC symbols, and then performs cross packet FEC decoding. Depending on the FEC rate and block size, which is dynamically controlled via group client feedback, only a subset of the transmit packets are required in order to successfully recover the original FEC block. The use of cross packet FEC overcomes the lack of packet retransmission in the wireless multicast system.

A UDP server 424 acts as a unicast packet server to bridge the received multicast video stream into a video decoder unit 426. The decoder unit 426 may be a standard unit which includes video decoding, digital rights management (DRM) and display driving. Alternatively, the decoder unit may be a higher performance unit that includes a low-latency video decoder, digital rights management, error concealment, and display driving.

Since standard mobile video players typically do not support operation over a multicast link, and instead rely on unicast signals, the UDP server 424 imitates such a unicast data stream for the player concerned. It will be appreciated that a video player that supports multicast transmission could be provided, and that the UDP server 424 would then not be required.

The video decoder unit 426 also receives overlay data from a local video overlay unit 428. The overlay unit 428 supplies data to be incorporated into the display to the user, and such data is provided by the local application 48. The local application receives data from the data subsystem 46 (described below), and generates the data to be overlaid on the video images received via the video subsystem 42.

The client data subsystem 46 comprises a carousel unit 462, and a database control unit 464. The carousel unit 462 receives and processes the incoming multicast packets from a chosen data carousel being transmitted by the transmission system. On request from the local application 48, the carousel unit 462 performs FEC decoding for a specified data carousel stream. A list of available carousels is included as proprietary data in the parallel data stream (using a proprietary session announcement protocol). Received data is stored until the entire carousel has been received. Once all the data has been received, it is passed to the database control unit 464.

The database control block 464 extracts the multimedia data from the received carousel and updates the necessary local databases and file systems. This data is then available to the local application 48.

The client adaption subsystem 44 comprises a quality of service extraction unit 442 and a feedback server 444. The quality of service extraction unit 442 computes parameters such as the packet loss and FEC decoder block error rates. This information, together with the received signal level, is then passed to the feedback server 444.

The feedback server 444 intermittently sends back standard unicast data packets from the client to the processing unit 360 of the adaptation subsystem 36 of the transmission system shown in Figure 2. These data are combined with information from other clients to drive the adaptive system controller 362.

A schematic representation of the mechanism which implements the FEC encode and redundant data removal and replacement is shown in Figure 4.

In use, the wireless modulation and coding mode for multicast transmission is selected together with the video structure and the number of video streams based on latency, coverage and video quality needs. The values assigned to each of these parameters are then dynamically adjusted for the entire system, based on quality of service statistics gathered from the feedback received by wireless transceiver 19 from a group of active wireless clients 22a...22n. In this case, the video transmission bit rate and resolution of each stream of video data are adapted based on the signal issued by the adaptive system controller 362. The signal generated by adaptive system controller 362 is based on analysis, by the processing unit 360, of at least one of the following parameters: content analysis, statistical multiplexing, and the level of required cross packet FEC. These per-stream parameters are optimised in real-time, based on quality of service feedback statistics generated by data processing unit 360 based on latency, coverage and video quality targets data which are set by the system operator.

Adaptation of the video, wireless and error correction parameters based on the output from adaptive subsystem 36, is performed based on a closed loop approach to ensure optimum multicast delivery to all clients within the footprint of the wireless transceiver (access point or base station). This dynamic approach ensures that the system is able to self adapt and configure to changing environments and crowd levels. Quality of service statistics generated by the data processing unit 360 can also be used for diagnostic and maintenance processes which may be carried out directly or remotely via a wired or wireless network.

The feedback data provided by a group of active clients 22a...22n enables adaptation of a variety of parameters including video encoder bit rate and resolution, cross packet block size and FEC rate, video structure and wireless multicast modulation and coding mode to optimise the trade-off between video quality, wireless coverage and end-to-end latency.

A network embodying one or more aspects of the present invention can enable video quality, data robustness and signal coverage to be optimised without operator involvement. Such a network is adaptable to environmental changes and also to changing crowd positions when in use. The techniques embodying aspects of the present invention use significant levels of cross layer interaction to optimise performance. For example, video data is packetised intelligently and key parameters are sent separately from the video data over the unreliable wireless multicast channel. Video transcoding or encoding is used to adjust the video rate to the FEC rate and available wireless rate as well as to restructure the video data to adjust dynamically end-to-end latency and to support mobile devices where short video data structures are desirable.

Embodiments of the present invention can implement intelligent generation and packaging of compressed video information into self-contained chunks suitable for transmission over wired and wireless networks such that a single packet loss will only impact a single slice of the compressed video, and unrecovered packets in an FEC block will only affect a single portion of video data. In addition, such an embodiment can facilitate joint wireless/video adaptation which operates on a "self-healing" basis for multicast video data streams being transmitted to overcome outages in the reception of the transmitted signal caused by issues such as crowd formation and motion which can occur in stadium (or other) environments.

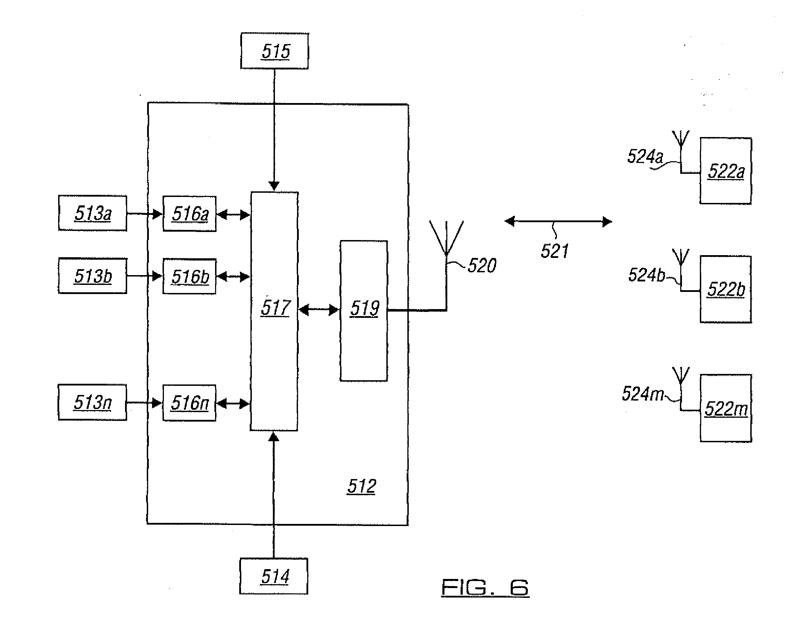

Figure 6 illustrates a multicast data transmission system embodying one aspect of the present invention, and comprising a server 512 to which are connected a plurality of video data sources 513a..513n, an operator data input device 514, and a database of pre-recorded video stream data 515.

The server 512 comprises a plurality of encoders 516a...516n connected to receive video data from respective ones of the video data sources 513a...513n. The server 512 also includes a controller 517 which is connected to receive encoded data from the encoders 516a...516n, to receive control data from the input device 514, and video data from the database 515.

The server 512 includes a wireless transceiver 519 connected to receive data from the controller 517, and operable to output that data, via an antenna 520, as radio frequency signals over an air interface 521. The wireless transceiver 519 may be provided by one or more wireless transceivers. Typically tens of transceivers (access points) will be used to cover a stadium or other venue. A plurality of client devices 522a...522m, each of which is provided with a wireless transceiver 524a...524m, communicate with the server 512, and receive data transmitted from the wireless transceiver(s). In embodiments of the present invention, the data transmitted by the server 512 is multicast to all of the client devices 522a...522m using a single modulation and coding selection (MCS) mode, compressed at a target bit rate $k_i$ bits/second. In cases where client$i$ experiences different channel conditions to client$j$ ($i \neq j$), due to different packet error rates (PER), it may be advantageous to modify the MCS mode by changing the overall error control coding and/or modulation mode.

The controller 517 includes link adaptor functionality which has a data path separate to the video stream path. The link adaptor functionality uses channel state feedback from client devices 522a...522m, current transmission parameters from the wireless transceiver 519, and current video parameters from the encoders 516a...516n, to control the transmission mode of the wireless transceiver 519, and to control the encoder parameters, as will be described below.

It is to be understood that the total number of video sources 513 is equal to the total number of encoders 516 and is represented by the integer 'n'. In addition, the total number of client devices 522 is equal to the total number of transceivers 524 and is represented by the integer 'm'. Furthermore, n may be equal to, or different from 'm'.

Embodiments of the present invention provide a rigorous switching scheme based on estimates of the received video distortion. In one example, the distortion corresponds to the Mean Square Error (MSE) between the received and original pixels and includes encoding distortion (due to the coding, transform and motion compensation operation of the encoder) as well as end-to-end distortion (due to error propagation and error concealment). It is assumed that the ratio between the bit rates carried on each mode follows the ratio of the data rates available at the physical layer for each mode and that the maximum size of the video packet generated at the encoder is not modified.

An embodiment of this aspect of the invention uses an estimate of the video distortion to determine when to switch to an alternative transmission data rate. In such an embodiment, which will be described in more detail below, switching from one data rate to another depends on the distortion experienced in the current transmission mode and on the predicted distortion on adjacent modes. For a given channel condition, the mode offering the lowest distortion, i.e. the best video quality, is selected. Without a reference measurement, distortion cannot be computed at the transmitter and needs to be estimated.

Embodiments of this aspect of the invention are now described in which a transmission data rate is selected. The references to data rate selection are for the sake of clarity. It will be readily appreciated that other embodiments of the invention make selection of transmission mode in accordance with the techniques set out below. Such a transmission mode is preferably a modulation and coding selection (MCS) mode.

To enable mode switching based on distortion, it is necessary to estimate the distortion of the received sequence transmitted at the current rate, under the given channel conditions, and the distortions of the received sequence if transmitted at lower and higher rates, under their corresponding channel conditions. To do so, it is necessary to estimate respective rate distortion curves for a series of MCS modes; and an end-to end distortion model.

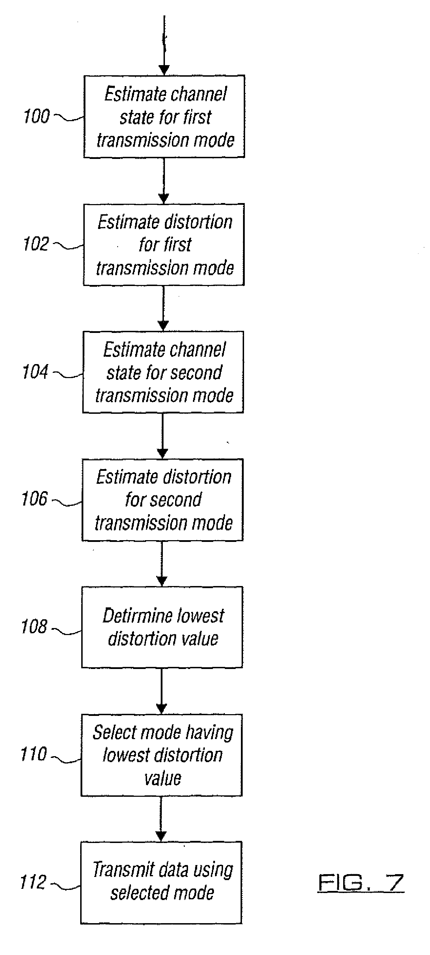

Figure 7 illustrates these steps in a method embodying another aspect of the present invention. At step 100, the channel state is estimated for a first MCS mode. The first MCS mode is that already being used for the transmission of data to the client device. The detail of the calculation of channel state will be described below. Using the calculated channel state, the current distortion level is estimated (step 102).

The channel state is then estimated for a second MCS mode different to the first MCS mode (step 104). Following this second channel state estimation, an estimation is made of the distortion level that would occur at the second MCS mode under the estimated channel conditions (step 106).

Next, at step 108, the lowest of the distortion levels is determined, and then the MCS mode having the lowest corresponding distortion level is chosen (step 110). Data is then transmitted using the chosen MCS mode (step 112).

Although the flowchart of Figure 7 illustrates one additional MCS mode being compared with the existing MCS mode, it will be readily appreciated that any number of MCS modes can be used to provide channel state and distortion level estimations. In that case, for each extra MCS mode, steps 104 and 106 are performed in order to produce a distortion value for the MCS mode concerned. The selection of MCS mode of step 110 is then made between all of the MCS modes used for the estimations. Detailed descriptions of the various steps in the method, namely the channel sate estimation and distortion estimation, are now provided.

The channel state is estimated for each receiving client device. This cannot be done continuously as there is insufficient bandwidth to support feedback from multiple clients simultaneously. However, a statistical estimate of channel capacity can be determined using knowledge of the current access point operating conditions (for example MCS mode, application FEC etc) combined with periodic limited feedback from sampled devices. Devices could either be polled by the controller 517 or transmit periodically in a given timeslot in order to avoid peaks in the feedback traffic rate. Devices could for example, report actual instantaneous packet error rate (PER), RSSI (Received Signal Strength) or delay values based on packet dispersion measurements, or a combination of both approaches. They can also report their current location from GPS (global positioning system) information. If GPS information is not available then approximate location can be derived from the antenna sector that serves the client. Packet dispersion launches two packets, back to back into the channel and estimates channel capacity based on the relative delay between reception of the two packets.

As an example, if 1,000 clients were connected to an access point serving content at a total bit rate of 20Mbps, Feedback of, for example, five bytes of status information each second would result in a total feedback error rate of 5x1000 = 5kbps, which is 0.025% of the total bandwidth. Even with 10,000 nodes, the figure is only 0.25% of the total bandwidth. Such a level is acceptable in terms of its impact on overall video data rate. From these instantaneous status measurements, an error surface (error rate or channel capacity vs spatial location) can be obtained through interpolation (linear, bilinear, quadratic or other polynomial fit) of the individual measurements. The central controller (link adaptor) would be aware of the total number of clients connected, the spatial distribution of those clients and the error probability or channel state surface.

An alternative approach would be for individual clients only to send when the residual error rate exceeds a threshold level. This approach however has the disadvantage of not providing a nil response which can be used to establish connectivity.

As an example (using RSSI as the measure), a weighted average, S, accounting for range from the access point can be used:

$$S(t) = \frac{1}{M} \sum_{i=1}^{M} \frac{1}{d_i} RSSI(i,t)$$

$$(1a)$$

where di is the normalised distance between transmitter and receiver.

As an alternative, a weighted rank order statistic can be used. Such a statistic can take account of distance and would use the requirement that a given percentage (100(M-K)/M %) of the clients have to be at least as good as that used for assessment:

$$S(t) = rank_M^K \left( RSSI(i,t) \right)$$

$$(1b)$$

Estimation of the distortion level will now be described. An estimate of rate distortion performance for multicast transmissions in the current MCS mode, and in other, possibly adjacent, modes, is made taking account of content type and the effects of error propagation and concealment at the decoders across the multicast group. Such estimations can thus be used to influence mode (MCS mode) switching, quantiser (Qp) selection and the addition of redundancy to ensure optimum end to end performance, based on video quality rather than throughput alone.

For the sake of clarity, the description below assumes that just one video sequence is transmitted. However, it will be readily appreciated that the method can be extended to multiple encoded sequences. In such a case, some means of allocating bit rate according to content priority or activity is desirable.

A simple empirical model is employed, and is aimed at deriving a local estimate of the rate distortion curve in order to approximate the distortion at lower and higher rates, without relying on multiple encodings, i.e. when only one point of the curve is known. The distortion used here is the MSE between the reconstructed and original pixels and is only due to the motion compensation, quantisation and transform operations of the encoder. The distortion now should be a function of the proportion of devices experiencing unacceptable error rates and the average error rate in the current mode.

A first assumption is that the current data have been encoded at the current data rate. The average distortion is therefore available, and then an estimation of distortion due to coding for the sequence encoded at higher and lower rates. For example, in H.264/AVC (see joint Video Team of ISO/IEC MPEG and ITU-T VCEG, "ITU-T H.264 - Series H: Audiovisual and Multimedia Systems - Advanced Video Coding for Generic Audio Visual Services"), an increase of 6 in the quantisation parameter (QP) approximately halves the bit rate (equivalent to a decrease of 1 in the log2 bit rate). A simple linear relationship between the QP and the log2 of the bit rate can be adopted. The quantisation design of H.264 allows a local and linear relationship between PSNR and the step size control parameter QP.

The system can be described with two equations and four unknowns, as below:

$$\log_2(R) = a \times QP + b$$
$$PSNR = c \times QP + d$$

$$(2)$$

which can be rewritten as

$$PSNR = \frac{c}{a} \times \log_2(R) + (d - \frac{bc}{a})$$

$$(3)$$

This linear relationship between PSNR and the base two of the logarithm of the bit rate has been verified by plotting the actual PSNR vs $\log_2(R)$ for all data structures in the known table and coastguard test sequences. Similar curves have been obtained with other sequences and we can thus assume that the curves are locally linear, i.e. three adjacent points are aligned.

To derive fully the parameters of this linear model, several parallel encodings would be needed, but this is not practical. From the encoding of the current data structure, the current PSNRc (derived from the averaged MSE), the current data rate Rc and the current average QPc are known. Using the fact that an increase of 6 in 10 QP halves the bit rate, we derive a = -1/6. Moreover, empirical studies for the known Common Intermediate Format (CIF) 4:2:0 format have shown that trial encodings with a QP of 6 leads to an almost constant PSNR of 55.68 dB (± 0.3dB) for the known akiyo, coastguard, table, and foreman test sequences. We can now calculate the four parameters a, b, c and d as:

$$a = -\frac{1}{6}$$

$$b = \log_2(R_c) + \frac{QP_c}{6}$$

$$c = \frac{PSNR_c - 55.68}{QP_c - 6}$$

$$d = \frac{55.68 \times QP_c - 6 \times PSNR_c}{QP_c - 6}$$

$$(4)$$

From empirical study, it is found that weighting the parameter c by a scalar dependent on the average QP improves the accuracy of the model. The proposed model employing weighting factors thus offers an acceptable local estimate of encoding distortions for the sequence at lower and higher bit rates.

The procedure to derive the distortion of the current data structure of a sequence as if it was encoded at the lower and higher local (adjacent) rates is summarised as follows.

   1) Derive rate Rc, average QPc, average MSEc and PSNRc from the encoding of the current data structure GOP

$$PSNR_c = 10 \times \log_{10}\left(\frac{255 \times 255}{MSE_c}\right)$$

   2) Derive a, b, c and d using equations (4)
   3) Derive PSNR1 and PSNRh video quality using equation (2) with the corresponding lower and higher rates R1 and Rh, respectively. It is assumed that the ratios between the bit rates carried on each transmission mode follows the ratios of the raw link speeds for the wireless LAN physical layer.
   4) Compute MSE1 and MSEh, from PSNR1 and PSNRh

A suitable end-to-end distortion model can be used to estimate the distortion of the received video. In the present example, the estimation is limited to a single reference frame; however, the model remains valid with a larger number of reference frames.

Considering a Previous Frame Copy (PFC) concealment algorithm at the decoder, in which missing pixels due to packet loss during transmission are replaced by the co-located pixels in the previous reconstructed frame, it is assumed that the probability of a packet loss is pc on the current rate. Other error concealment and redundancy-based methods are also applicable to this technique. The current end-to-end distortion for pixel i of frame n, noted $Dist_{e2e,c}(n,i)$ accounts for a) the error propagation from frame n-1 to frame n, DEP(n,i); and b) the PFC error 25 concealment, DEC(n,i). Thus:

$$Dist_{e2e,c}(n,i) = (1 - p_c) \times D_{EP}(n,i) + p_c \times D_{EC}(n,i)$$

$$(5)$$

Full details on how DEP(n,i), and DEC(n,i) are derived can be found in, for example, S. Rane and B. Girod, "Analysis of Error-Resilient Video Transmission Based on Systematic Source Channel Coding", Picture Coding Symposium 2004, and P. 5 Ferré, D. Agrafiotis, D. Bull, "Macroblock Selection Algorithms for Error Resilient H.264 Video Wireless Transmission using Redundant Slices", SPIE Electronic Imaging VCIP 2008.

Assuming that a pixel i of frame n has been predicted from pixel j in frame n-1, $Dist_{e2e,c}(n,i)$ can be expressed as:

$$Dist_{e2e,c}(n,i) = (1 - p_c) \times Dist_{e2e,c}(n-1,j) + p_c \times \left(RMSE_c(n-1,n,i) + Dist_{e2e,c}(n-1,i)\right)$$

$$(6)$$

AMSEc(n-1, n,i) is the MSE between reconstructed frames n and n-1 at pixel location i at the current rate. If the pixel i belongs to an intra block, there is no distortion due to error propagation but only due to error concealment and Diste2e,c(n,i) is rewritten as:

$$Dist_{e2e,c}(n,i) = p_c \times \left(RMSE_c(n-1,n,i) + Dist_{e2e,c}(n-1,i)\right)$$

$$(7)$$

In order to compute the end-to-end distortion of the sequence transmitted at lower and higher adjacent rates, $Dist_{e2e,l}(n,i)$ and $Dist_{e2e,h}(n,i)$, respectively, with a packet loss of pl and ph, respectively, it is assumed that the motion estimation is similar at all the rates and the difference in quality between the reconstructed sequences is only due to quantisation. Therefore, if pixel i in frame n is predicted from pixel j in frame n-1 at the current rate, it will also be predicted from the same pixel j in frame n-1 at lower and higher rates. The two distortions at lower and higher rates can then be expressed as:

$$Dist_{e2e,l}(n,i) = (1 - p_l) \times Dist_{e2e,l}(n-1,j) + p_l \times \left(RMSE_l(n-1,n,i) + Dist_{e2e,l}(n-1,i)\right)$$

$$Dist_{e2e,h}(n,i) = (1 - p_h) \times Dist_{e2e,h}(n-1,j) + p_h \times \left(RMSE_h(n-1,n,i) + Dist_{e2e,h}(n-1,i)\right)$$

$$(8)$$

$Dist_{e2e,l}(n,i)$ and $Dist_{c2e,h}(n,i)$ only differ from $Dist_{e2e,c}(n,i)$ by the packet loss and the impact of the PFC concealment algorithm, i.e. by RMSEl(n-1, n,i) and RMSEh(n-1, n,i). If we consider the lower rate, RMSEl(n-1, n,i) is given by:

$$RMSE_l(n, n-1, i) = \left[i_{rec,l}(n) - i_{rec,l}(n-1)\right]^2$$

$$= \left[i_{rec,l}(n) - i_{rec,c}(n) + i_{rec,c}(n) - i_{rec,l}(n-1) + i_{rec,c}(n-1) - i_{rec,c}(n-1)\right]^2$$

$$= \left[\left(i_{rec,c}(n) - i_{rec,c}(n-1)\right) + \left(i_{rec,l}(n) - i_{rec,c}(n)\right) - \left(i_{rec,l}(n-1) - i_{rec,c}(n-1)\right)\right]^2$$

$$(9)$$

where $i_{rec,c}(n)$ and $i_{rec,l}(n)$ are the reconstructed pixels at location i from frame n at the current and lower rates respectively. If it is assumed that the quality difference between the two rates is evenly spread along the frames of a data structure, the differences $i_{rec,l}(n)-i_{rec,c}(n)$ AND $i_{rec,l}(n-1)-i_{rec,c}(n-1)$ cancel.

Equation (9) can therefore be rewritten as:

$$RMSE_l(n, n-1, i) = \left[\left(i_{rec,c}(n) - i_{rec,c}(n-1)\right)\right]^2$$

$$= RMSE_c(n, n-1, i) = RMSE_h(n, n-1, i)$$

$$(10)$$

The error concealment produces a similar contribution to the end-to-end distortion for the current (first), lower (second) and higher (third) data rates. The overall average distortions, including the distortion due to quantisation and transform as 18 well as the end-to-end distortion due to error propagation and error concealment, for the lower, current and higher rates, can thus be estimated by

$$Dist_l = Dist_{e2e,l} + MSE_l$$
$$Dist_c = Dist_{e2e,c} + MSE_c$$
$$Dist_h = Dist_{e2e,h} + MSE_h$$

$$(11)$$

One link adaptation scheme embodying the present invention requires that the ratios between the bit rates carried on each mode follows the ratios of the link-speeds available at the physical layer for each mode. Moreover, it requires that the maximum size of the video packet generated at the encoder is not modified, so that a single PER versus C/N lookup table can be used, assuming a single channel type. It is aimed at low latency video transmission. Such a scheme allows dynamic mode switching at each data structure and operates as follows:

1. Encode the current data slice at the specified bit rate on the specified link speed
2. Extract the average QP, average MSE, then the average PSNR and average rate R for the data slice. 15
3. Extract the PER from lookup tables using the average RSSI (or other measure) for an ensemble of clients in the multicast group.
4. Derive the estimated distortion at the current, lower and higher modes (data rates) MSEc, MSEl and MSEh
5. Compare the distortions 20

- if MSEc < MSEl and MSEc < MSEh: the distortion estimated on the current mode is the lowest; stay in the current mode (data rate).
- if MSEl < MSEc and MSEl < MSEh: the distortion estimated on the lower mode is the lowest; switch to the lower mode, at a lower rate.
- if MSEh < MSEc and MSEh < MSEl: the distortion estimated on the higher mode is the lowest; switch to the higher mode, at a higher rate.

6. Update the video bit rate at the application layer, update the link speed at the link layer.
7. Proceed to the next data slice and go back to step 1.

The ability to adjust and scale the video rate to the available wireless throughput achieves robust wireless video data delivery. The system automatically adapts cross packet FEC parameters to any environment and crowd level and this simplifies installation and maintenance issues. As dedicated encoding or transcoding is required for mobile devices, which place specific constraints on the video structure, adaptive transcoding or encoding for analogue video inputs is applied adaptively prior to wireless multicast distribution. The performance of a stadium based system will vary significantly when crowds of people are present and the system is robust enough to self-adapt to crowd levels to guarantee reception quality and stadium wide coverage.

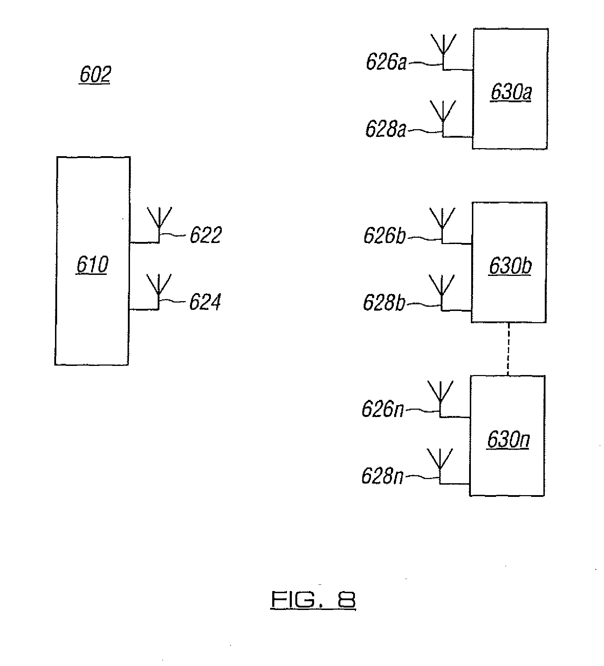

With reference now to Figure 8 there is shown a further aspect of the invention in which there is illustrated a schematic diagram of a network 602 comprising a server 610 provided with transmitters 622, 624 and a plurality of clients 630a-630n, each provided with receivers 626, 628.

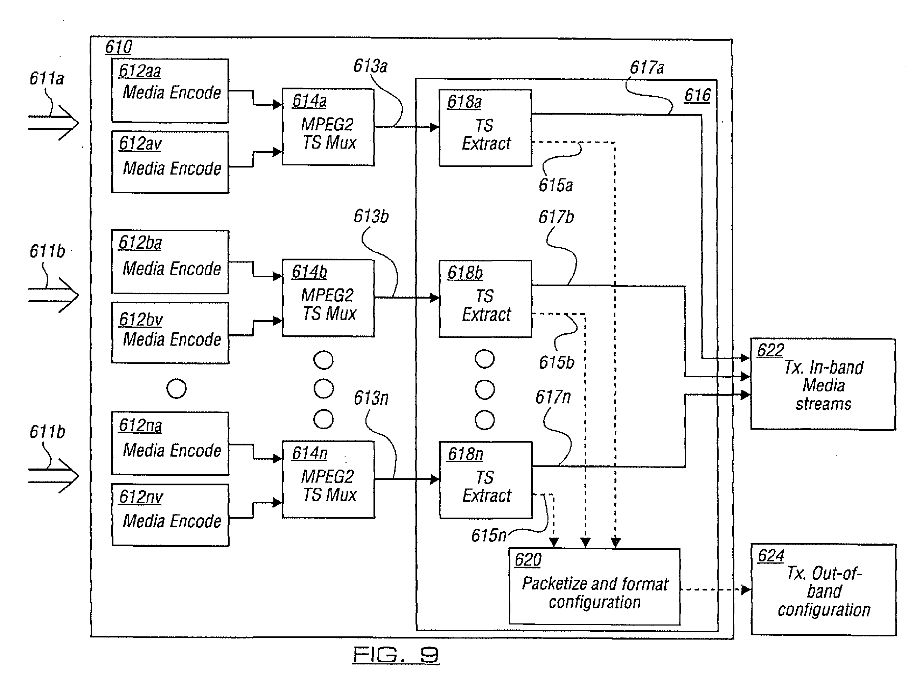

With reference to Figure 9 there is shown in more detail server 610 which is provided with an in-band transmitter 622 and out-of band transmitter 624. The server 610 comprises encoders, in this case media encoders, 612a-612n, Transport Stream Multiplexers (TS Mux) 614a-614n which in this case are MPEG2 TS Mux, and server data transmission mechanism 616. Within the server data transmission mechanism there is provided extraction mechanism 618a-618n and data format mechanism 620.

The server 610, in this case, receives multiple input media streams 611a-611n with each media stream 611a-611n provided to an audio encoder 612aa-612na and a video encoder 612av-612nv respectively. The data output from encoders 12aa,12av-612na,612nv is input to corresponding MPEG2 TS Mux 614a-614n respectively. Each MPEG2 TS Mux 614a-614n combines the data from the multiple encoders 612aa,612av - 612na,612nv into corresponding multiplexed MREG2 TS data streams 613a-613n which are input to corresponding extraction mechanisms 618a-618n within server data transmission mechanism 616. Each extraction mechanism 618a-618n parses the generated transport stream 613a-613n and removes both the transport stream and codec configuration data which are provided as a data stream 615a-615n to data format mechanism 620 wherein the transport stream and codec configuration data are packetized and suitably formatted for provision to out-of band transmitter 624 for transmission as an out-of-band configuration data stream 625. The multimedia data stream 617a-617n output from extraction mechanism 618a-618n is provided to in-band transmitter 622 for transmission in-band as an in-band media data stream 626. The network 602 over which server 610 transmits may be reliable or unreliable.

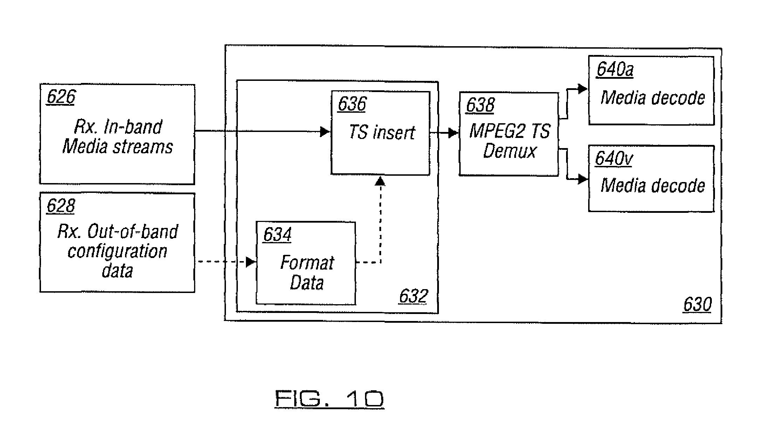

A receiving client 630 is shown in Figure 10, and may be any one of receiving clients 630a-630n. Client 630 is provided with an in-band receiver 626 and an out-of-band receiver 628. The client 630 comprises client data transmission mechanism 632, Transport Stream Demultiplexer (TS Demux) 638 and an audio decoder 640a and a video decoder 640v. The client data transmission mechanism 632 comprises a data format mechanism 634 and an insertion mechanism 636. The client 630 receives both the in-band media data transport stream 617 and the out-of-band transport stream and codec configuration data 629 from in-band receiver 626 and out-of-band receiver 628 respectively. The out-of band configuration data 629 are provided to data format mechanism 634 where the out-of-band configuration data 629 are formatted into the original transport stream and codec data form 615. The insertion mechanism 636 receives the transport stream and codec configuration data 615 from the data format mechanism 634 and also receives media data transport stream 617 from the in-band receiver 626. The insertion mechanism 636 re-inserts the transport stream and codec configuration data 615 into transport stream 617. The output data of the client data transmission mechanism 632 are functionally identical data stream 613 to that going into the server data transmission mechanism 616. This consistency of data ensures that generic standards compliant codec can be used. The data stream 613 is then provided to TS Demux 638 which in this case is a MPEG2 TS Demux which demultiplexes the data stream before providing it to decoders 640a, 640v for decoding and provision to a display device (not shown).

As transport stream configuration data and codec configuration data 615 extracted by extraction mechanism 618a-618n change relatively infrequently for any given video and audio stream, bandwidth within the network can be preserved for transmission of the transport stream data 617 by sending the configuration data 615, at an appropriate frequency, out-of-band. The preserved bandwidth can then be optimised to maintain quality of service in the provision of the video and audio stream.

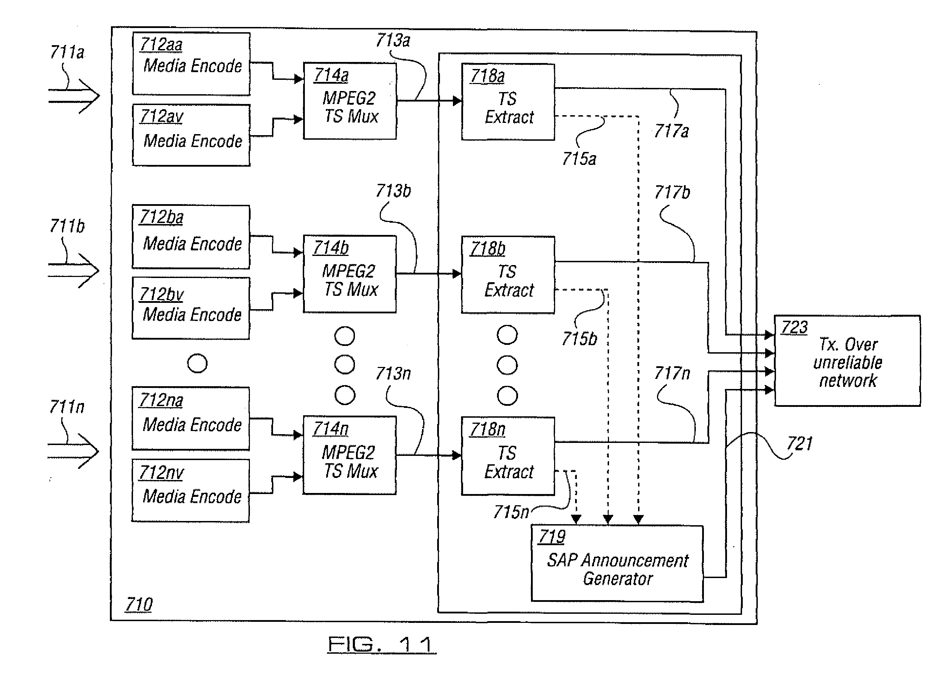

With reference to Figure 11, there is illustrated a second embodiment of a server 710 provided with a transmitter 723 suitable for transmission over an unreliable network. The server 710 comprises encoders, in this case media encoders, 712a-712n, Transport Stream Multiplexers (TS Mux) 714a-714n which in this case are MPEG2 TS Mux, and server data transmission mechanism 716. Within the server data transmission mechanism there is provided extraction mechanism 718a-718n and an announcement generator mechanism 719. The announcement generator mechanism 719 is in this case a Session Announcement Protocol announcement generator mechanism.

The server 710, in this case, receives multiple input media streams 711a-711n with each media stream 711a-711n provided to an audio encoder 712aa-712na and a video encoder 712av-712nv respectively. The data output from encoders 712aa,712av-712na,712nv is input to a corresponding MPEG2 TS Mux 714a-714n respectively. Each MPEG2 TS Mux 714a-714n combines the data from the multiple encoders 712aa,712av - 712na,712nv into corresponding multiplexed MREG2 TS data streams 713a-713n which are input into corresponding extraction mechanism 718a-718n within server data transmission mechanism 716. Each extraction mechanism 718a-718n parses the multiplexed stream 713a-713n and removes both the transport stream and codec configuration data which is provided as a data stream 715a-715n to announcement generator mechanism 719 wherein the transport stream and codec configuration data is packetized and suitably formatted and with identifiers for the available transport streams 717a-717n to form an announcement message data stream 721 for provision to transmitter 723 for transmission over an unreliable network. The multimedia data transport streams 717a-717n output from extraction mechanisms 718a-718n are also provided to transmitter 723 for transmission over an unreliable network. Announcement messages 721 are sent by transmitter 723 at predetermined bit rate allocated for sending announcement messages which is known as an announcement interval.

A receiving client 730 is shown in Figure 11, is operable to receive transmissions from server 710. Client 730 is provided with a receiver 727 for receiving transmissions from server 710 transmitted over an unreliable network. The client 730 comprises client data transmission mechanism 732, Transport Stream Demultiplexer (TS Demux) 738, audio decoders 740a and video decoder 740v. The client data transmission mechanism 732 comprises an announcement receiver mechanism 733, a stream selector mechanism 735 and an insertion mechanism 736. The announcement receiver mechanism 733 is, in this case, an SAP Announcement receiver mechanism.

In use, the client 730 receives the data transmitted over an unreliable network at receiver 727. Receiver 727 listens for announcement messages 721. The configuration data 715a-715n and identifiers for the available streams 717a-717n are included in the announcement messages 721 which are received and forwarded to announcement receiver 733. Upon successfully receiving the announcement message 721, announcement receiver 733 extracts the configuration data 715 which is formatted appropriated and provided to the insertion mechanism 736. The announcement receiver 733 also extracts the identifiers for the available transport streams 717a-717n and provides this data to stream selector mechanism 735. The stream selector mechanism 735 selects the required transport stream and provides this to insertion mechanism 736. The insertion mechanism 736 re-inserts the transport stream and codec configuration data 715 into appropriate transport stream 717. The output data of the client data transmission mechanism 732 are functionally identical data stream 713 to that going into the server data transmission mechanism 716. This consistency of data ensures that generic standards compliant codec can be used. The data stream 713 is then provided to TS Demux 738 which in this case is a MPEG2 TS Demux which demultiplexes the data stream before providing it to decoders 740a, 740v for decoding and provision to a display device (not shown).

As the client 730 must receive the announcement messages 721 in order to know what data streams 717a-717n are available and successful reception of an announcement message 721 means that the client 730 has also received the parameter information within the configuration data 715a-715n which provides the transmission mechanism with a pseudo-reliable characteristic of delivering the configuration data 717a-717n.

The inclusion of the configuration data 715a-715n within an out-of-band stream broadcast service, such as in this example, Session Announcement Protocol (SAP) within a multicast environment simultaneously provides the client with available transport data 717a-717n and the corresponding transport stream and codec configuration data 715a-715n required to deliver each transport data stream 717a-717n efficiently.

As transport stream configuration data and codec configuration data 715 extracted by extraction mechanism 718a-718n change relatively infrequently for any given video and audio stream, bandwidth within the network can be preserved for transmission of the transport stream data 717 by sending the configuration data 715, at an appropriate frequency, out-of-band. The preserved bandwidth can then be optimised to maintain quality of service in the provision of the video and audio stream.

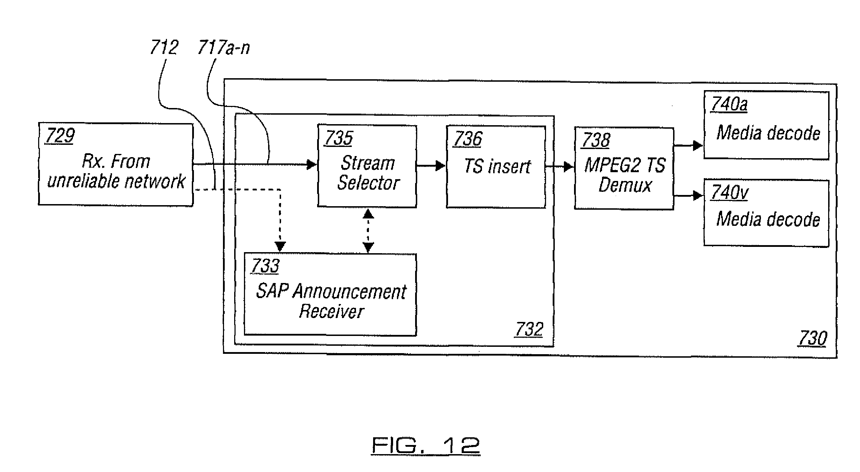

An example of a situation in which the implementation of the transmission mechanism of the server-client system of Figure 11 and 12 is applicable is the multicast delivery of media streams to large numbers of receivers over an unreliable network, e.g. WiFi 802.11g. In such a situation, bandwidth available for transmission between the server and clients is very limited; hence reliably sending configuration data out-of-band is desirable.

For each transport data stream 717a-717n, transmitted by the server 710 in Figure 11 above, the SAP announcement generator 719 produces an Announcement message 721a-721n. The payload of each announcement message 721a-721n uses a Session Description Protocol to describe the parameters of the respective transport data stream 717a-717n. An example format for the SAP announcement message 721, when using H264 and AAC to encode the media stream is:

```
v=0
o=- <stream ID> <version> IN IP4 <server IP Address>
s=<Stream Name from UI>
t=0 0
c=IN IP4 <multicast address>/<ttl>
m=data <port> UDP
a=X-H264 <H264 parameters>
a=X-AAC <AAC parameters>
a=X-TS <TS Parameters>
stream ID = a unique id number for the stream
version = 0 and increments each time the stream session is updated
port = the UDP port this multicast stream is sent on
ttl = multicast time to live
```

Where
**X**-**H264** - Contains the base64 encoded SPS and PPS strings, an example of this is:

```
a=X-H264 profile-level-id=42E00D;
sprop-parameter-sets=Z0LgDZWgUGfn/8AAQABEAAAPoAABhqGDAASTwBJWrgAC,aM44gA==;
parameter-sets=ZOLgDZMgUGfn/8AAQABEAAAPoAABhqGDAASTwBJWrgAC,aM44gA==;
packetization-mode=1
```

**X-AAC** - Contains the base64 encoded AAC strings, an example of this is:

```
a=X-AAC profile-level-id=15; config=1190; streamtype=5; mode=AAC-hbr;
SizeLength=13; IndexLength=3; IndexDeltaLength=3
```

and **X**-**TS-**Contains the base64 encoded PAT and PMT strings, example of this is:

```
a=X-TS PAT=DZWgUG; PMTPID=23; PMT=DAASTwBJW
```

(continued)

| |
|---|
| PAT = base64 encoded Program Allocation Table (specifying a single Program Map Table present on PID <PMTPID>)<br>PMTPID = the PID to send the Program Map Table on<br>PMT = base64 encoded Program Map Table |

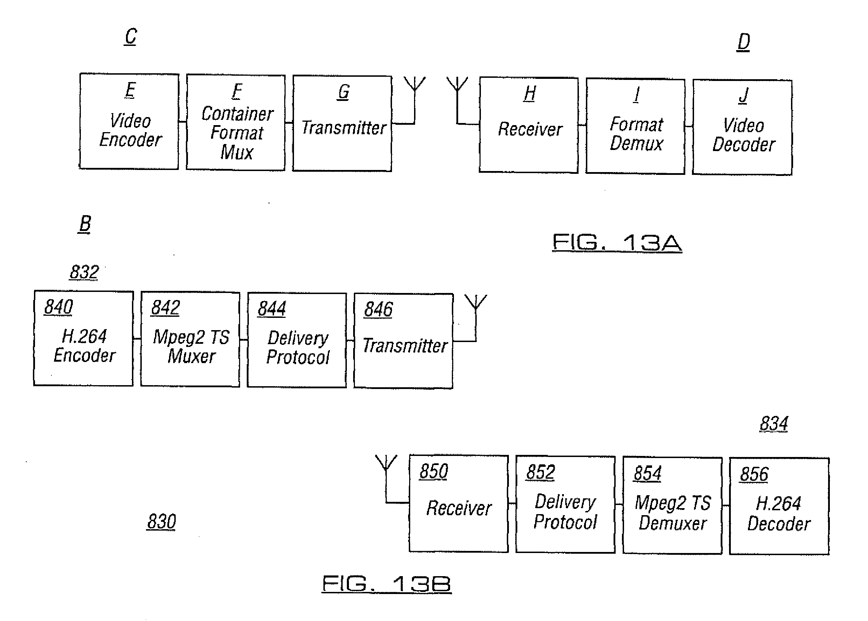

Referring now to Figure 13 there is shown a video transmission system 830, provided with a transmitting server 832 and a receiving client 834. The server 832 is provided with an encoder 840, which in this case implements a H.264 video coding standard, multiplexer 842, which in this place implements a MPEG-2 Transport Stream (TS) container format, a server delivery protocol mechanism 844 and a transmitter 846.

The client 834 is provided with a receiver 850, a client delivery protocol mechanism 852, a demultiplexer 854 which in this case implements the demultiplexing of the MPEG-2 Transport Stream (TS) container format and a decoder 856 which in this case implements the decoding of the H.264 video coding standard.

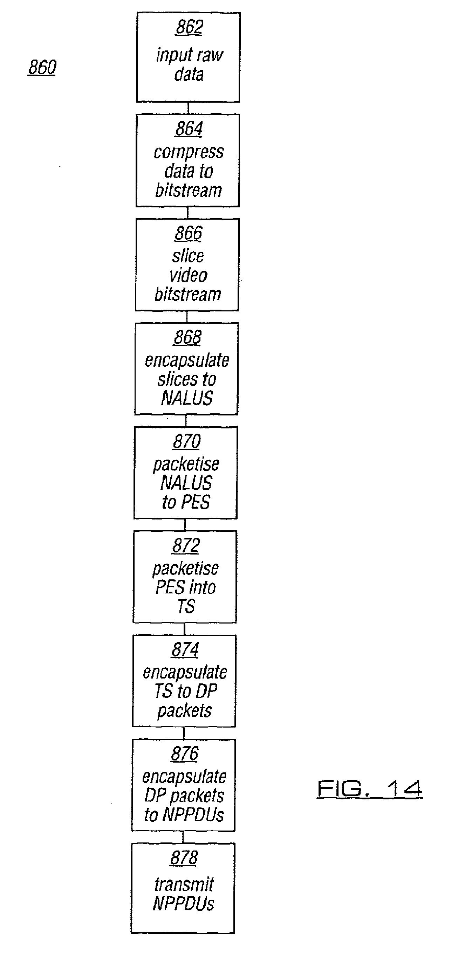

With reference to Figure 14 there is shown a block diagram of the error resilience mechanism 860 which is implemented in the server 832 of video transmission system 830 of Figure 13. A raw video data signal 862 is input into the H.264 standard video encoder 840 which compresses the video data signal into a compressed video bit stream 864 before slicing the video bit stream 866 into self-contained chunks. In the H.264 standard, a slice is a portion of the bit stream that is self-contained in the sense that if the active sequence parameter set (SPS) and picture parameter set (PPS) are known, the syntax elements within a slice can be parsed from the bit stream and the values of the samples in the area of the picture that the slice represents can be decoded without the use of data from other slices, provided that the previously decoded pictures referenced by the slice are available at the decoder.

Within the H.264 encoder 840, the slices are encapsulated into Network Adaptation Layer Units (NALUs) 868. H.264 NALUs include, in this case, a 1 byte NALU header and form a H.264 elementary stream (ES). The NALUs produced by the H.264 encoder 840 are provided to multiplexer 842.

In the multiplexer 842, the H.264 ES is packetized into a Packetized Elementary Stream (PES) 870 with, every PES packet containing a single slice. A data_alignment_indicatar field in the PES header of every PES packet is, in this case, set to indicate that each PES packet contains one slice. In addition, NALUs that do not contain a slice are inserted in the same PES packet as the slice preceding the non-slice NALUs and NALUs containing SPS or PPS information are inserted into the PES packet containing the first slice following the SPS or PPS NALUs. Furthermore, each PES packet contains an integral number of H.264 NALUs.

A presentation time stamp (PTS) or decoding time stamp (DTS) is provided in PES packet headers which contain the first byte of an advanced video coding (AVC) access unit. The PTS or DTS refer to the first access unit that commences in a given PES packet. Therefore, when an access unit is split into multiple PES packets, only the first PES packet contains the PTS and DTS information.

The PES is in turn packetized into a MPEG-2 Transport Stream (TS) 872. TS packets are, in this case, always 188 bytes, with 4 bytes of header and 184 bytes of payload. In this case a payload_unit_start_indicator field is used to indicate that the payload of the TS packet commences with the first byte of a PES packet. Each PES packet is fragmented into one or more TS packets with padding included where necessary to produce an integral number of TS packets. Therefore any one TS packet only contains data from one PES packet.

The TS packets are provided to delivery protocol mechanism 844 where they are aggregated using the Delivery Protocol (DP) 874 into DP packets. In this case, all TS packets belonging to the same PES packet, as indicated by the payload_unit_start_indicator, are packetised into a single DP packet and each DP packet contains all the TS packets belonging to only one PES packet. Furthermore, every DP packet contains an integral number of TS packets.

The DP packets are then encapsulated into Network physical layer protocol data units PPDUs via the network protocol mechanism 876. The DP packet size is determined by the delivery protocol mechanism 844 such that every network PPDU contains a single Delivery Protocol packet which means no packet aggregation or fragmentation occurs at the network or subsequent protocol layers. After taking into account any header introduced by the network and subsequent protocol layers, the resulting network PPDU is as close as possible but less or equal to the maximum transmission unit (MTU) size of the underlying network.

The PPDU's are then provided to transmitter 846, from where they are transmitted over the network 878. The error resilience mechanism 860 implements the co-ordinated configuration of the transmission stream data PDDU's within the server 832 to minimising the impact of packet loss on the video quality received by the client 834. Quantitatively, error resilience mechanism 860 ensures that a single network PPDU loss from the transmitted data stream will never result in more than one H.264 slice being lost or corrupted at the display device to which the client 834 provides the received video data. The robustness of the error resilience mechanism 860 is optimized by the determination of appropriate initial slice size for each encoded media data within system 830. Within the encoder 840, every picture included in the raw video data must be encoded into one or more slices. The number of bytes in a slice is variable. However, in this case, the H.264 encoder 840 is configured to encode a variable number of macroblocks (MBs) per slice such that each slice is close to a specified size in bytes. By generating more slices per picture, the video encoder 840 increases the robustness to loss of the data stream and in turn any errors arising will account for a smaller component of the picture data and therefore a smaller region of the picture will be affected. However, in one embodiment of the system small slices are aggregated in the transport and network layers (not shown). In this case, the loss of a PPDU will result in multiple lost slices. In an alternative embodiment of the system, where no aggregation of the small slices is performed, each small slice is carried in a separate PPDU; the header overhead incurred in the network will increase, resulting in a reduction in throughput of transmitted video data. The use of small slices also reduces the compression efficiency of the codec mechanism implemented across video encoder 840 and decoder 856 as more re-synchronization information is needed in the bit stream in order to make each slice independently decodable. Therefore, within encoder 840 the determination of slice size affects the relative optimization of the compression efficiency, packetizatian overhead, network throughput and robustness to loss of data of the system 830.

The error resilience mechanism 860 determines maximum slice size optimal for the system headers and limitations of the parameters of the encoder 840, multiplexer 842 and delivery protocol mechanism, along with the mechanism implemented with reference to Figure 14. The maximum network PPDU size is determined by the maximum transmission unit (MTU) of the underlying physical network, e.g. the size of the largest data packet that the underlying physical network protocol can transmit. In the case of the Ethernet, the MTU size is 1500 bytes.

As an example, Table 1 below lists the maximum slice size for a number of DP packet sizes. The calculation in Table 1 assumes that the NALU packet header is 1 byte, the PES packet header contains PTS/DTS fields only for the first NALU of a picture and therefore in this case the PES header for the PES packet containing the first slice of a picture is 19 bytes, whereas the PES header for all other PES packets is 9 bytes. The TS packet header is 4 bytes. The Delivery Protocol header is 8 bytes and the DP packet must contain an integral number of 188 byte TS packets. In addition, the maximum Internet Protocol (IP) packet size is also shown to illustrate the example with reference to an underlying network which is IP-based.

*Table 1: Slice Size and Delivery Packet size*

| Max slice size (first slice in picture) (bytes) | Max. slice size (not first slice in picture) (bytes) | PES packet size(bytes) | Number of TS packets | Delivery Protocol Packet size(bytes) | Max. IP Packet size(bytes) |
|---|---|---|---|---|---|
| 164 | 174 | 184 | 1 | 196 | 224 |
| 348 | 358 | 368 | 2 | 384 | 412 |
| 716 | 726 | 736 | 4 | 760 | 788 |
| 1452 | 1462 | 1472 | 8 | 1512 | 1540 |

The data shown in Table 1 illustrates an example where certain factors are not taken into account. An example of a factor which has not been taken into account is the situation when SPS or PPS NALUs are present in a PES packet, the maximum slice size for that PES packet must be reduced by the corresponding size of the SPS or PPS NALUs. In the example of Table 1, the maximum slice size has not been adjusted. Similarly, the last slice in a picture is commonly followed by NALUs not containing slices, e.g. SEI messages or access unit delimiters (AUD). When these NALUs are present in a PES packet, the maximum slice size for that PES packet must be reduced by the corresponding size of these NALUs, in the example of Table 1, this factor has not been taken into account.

In a second embodiment of the implementation of error resilience mechanism 860 in a video transmission system, the mechanism 860 is enhanced with the addition of error protection to the Delivery Protocol packets in the form of a forward error correction (FEC) scheme applied across the TS packets and integrated with the Delivery Protocol signaling.

A typical FEC scheme generates a number of repair symbols from a number of source symbols. A number of symbols could be lost during transmission. FEC decoding succeeds if a sufficient number of symbols are received correctly, and in this case, all the source symbols can be recovered. FEC decoding fails if an insufficient number of symbols are received, and, in that case, none of the missing source symbols can be recovered.

An FEC scheme can be included in an embodiment of the present invention as follows:

- All the TS packets belonging to a group of picture (GOP) are grouped into an FEC Block. A random_access_indicator field of the TS Header Adaptation Field can then be used to indicate the start of a GOP.
- FEC is applied over all the TS packets in an FEC Block.
- The FEC Repair symbols are encapsulated into Delivery Protocol packets.

An example rateless FEC scheme known as Raptor FEC is described in RFC5053. Additional optimizations that can be applied when using such a scheme are:

- To maximise the efficiency of the Raptor code, 1 Raptor symbol = 1 TS packet
- For each FEC block, a number of 188-byte Raptor repair symbols are generated
- A FEC symbol can be split into sub-symbols if a larger K is needed, or if the optimum value of K cannot be achieved because of delay constraints on the length of a GOP

The above scheme enables the video bit-rate and the amount of FEC to be changed for each FEC block.

When FEC symbols are not present, a delivery protocol packet contains a block ID and a sequence number, and the payload data consists of an integer number of TS packets. In this case, the sequence number is always monotonically increasing and is not reset when the block ID is incremented. Lost delivery protocol packets can be detected by gaps in the sequence number.

With a first FEC scheme, each delivery protocol packet contains one and only one FEC symbol. Symbols are delineated by monotonic sequence numbers (symbol number = sequence number).

With a second FEC scheme, each packet can contain one or more FEC symbols. The number of symbols per packet is not fixed. Symbols are still delineated by monotonic sequence numbers. In this case, the sequence number in the delivery protocol packet indicates the symbol number of the first FEC symbol present in that delivery protocol packet. Missing symbols can be identified by gaps in symbol number inferred from the symbol number of the first FEC symbol present in this packet Embodiments of the present invention provide methods and/or apparatus for controlling an output of a video encoder in conjunction with aggregation and fragmentation mechanisms occurring at the subsequent protocol layers such that the effect of a lost network PPDU on the reconstructed video at the receiver is minimised.

Such techniques can be combined with a rateless Forward Error Correction (FEC) scheme with minimal signalling such that the FEC coding rate and the video bit-rate can be changed on-the-fly in a seamless manner.

This aspect of the invention provides a novel method by which knowledge of this fragmentation and aggregation can be used to dictate a slicing strategy with the objective of minimizing the effect of a lost packet on the reconstructed video at the receiver and which features can be used alone or in combination with the other features and aspects of the invention as described herein to provide beneficial improvements to the transfer of video and/or audio..

Although aspects of the invention have been described with reference to the embodiments shown in the accompanying drawings, it is to be understood that the invention is not limited to the precise embodiments shown and that various changes and modifications may be effected without further inventive skill and effort, for example, the error resilience mechanism 860 can be implemented in a system which include other multimedia streams such as audio streams in addition to the video stream. In such a system, the additional multimedia streams are encapsulated inside the MPEG-2 TS as specified by the MPEG-2 TS standard. When the bit-rate of the additional stream is low compared to the video stream, the TS packets belonging to the additional stream are inserted in the same FEC block as the video TS packets. When the bit-rate of the additional stream is comparable to the video stream, it is coded separately within its own FEC block.

**Claims**

1. A method of transmitting data to a plurality of receivers over a transmission channel, the method comprising:

   transmitting the data to the plurality of receivers over a transmission channel using a first transmission mode;
   estimating a channel state for the transmission channel for the first transmission mode to produce a first channel estimate;
   estimating rate distortion for the transmission channel for the first transmission mode using the first channel estimate to produce a first distortion estimate;
   estimating a channel state for the transmission channel for a second transmission mode, different to the first transmission mode, to produce a second channel estimate;
   estimating rate distortion for the transmission channel for the second transmission mode using the second channel estimate to produce a second distortion estimate;
   selecting, as a selected transmission mode, that transmission mode from the first and second transmission modes which has the lowest corresponding distortion estimate; and
   transmitting the data to the plurality of receivers over the transmission channel using the selected transmission mode.

2. A method as claimed in claim 1, further comprising:

estimating a channel state for the transmission channel for a third transmission mode, different to the first and second transmission modes, to produce a third channel estimate;

estimating rate distortion for the transmission channel for the third transmission mode using the third channel estimate to produce a third distortion estimate;

wherein the step of selecting a transmission mode comprises selecting, as a selected transmission mode, that transmission mode from the first, second, and third transmission modes which has the lowest corresponding distortion estimate.

3. A method as claimed in claims 1 or 2, wherein the second transmission mode has a data rate lower than that of the first transmission mode and the third transmission mode has a data rate higher than that of the first data rate.

4. A method as claimed in any of the claims 1-3, further comprising determining a distortion model for the transmission channel, which distortion model relates to channel distortion for different transmission modes.

5. A method as claimed in claim 4 wherein the distortion model for the transmission channel uses mean square error values between original and received data values.

6. A method as claimed in claim 5, wherein the distortion model includes estimates of encoding distortion, and channel distortion.

7. A method as claimed in any one of the preceding claims, wherein the data transmitted is multicast data.

8. A method according to any of the preceding claims wherein the transmitted data includes multimedia data.

9. A method as claimed in any one of the preceding claims, wherein the transmitted data includes video data.

10. A system for transmitting data to a plurality of receivers over a transmission channel, the system comprising:

a transmitter operable to transmit data to a plurality of receivers over a transmission channel using a first transmission mode;

a channel state estimator operable to estimate a channel state for the transmission channel for the first transmission mode to produce a first channel estimate, and operable to estimate a channel state for the transmission channel for a second transmission mode, different to the first transmission mode, to produce a second channel estimate;

a distortion estimator operable to estimate rate distortion for the transmission channel for the first transmission mode using the first channel estimate to produce a first distortion estimate, and operable to estimate rate distortion for the transmission channel for the second transmission mode using the second channel estimate to produce a second distortion estimate; and

a rate selector operable to select, as a selected transmission mode, that transmission mode from the first and second transmission modes which has the lowest corresponding distortion estimate;

wherein the transmitter is operable to transmit subsequent data to the plurality of receivers over the transmission channel using the selected transmission mode.

11. A system as claimed in claim 10, wherein the channel state estimator is operable to estimate a channel state for the transmission channel for a third transmission mode, different to the first and second transmission modes, to produce a third channel estimate, and wherein the distortion estimator is operable to estimate rate distortion for the transmission channel for the third transmission mode using the third channel estimate to produce a third distortion estimate, and

wherein the rate selector is operable to select, as a selected transmission mode, that transmission mode of the first, second, and third transmission modes which has the lowest corresponding distortion estimate.

12. A system as claimed in claim 10 or 11, wherein the second transmission mode has a data rate lower than that of the first transmission mode and the third transmission mode has a data rate higher than that of the first transmission mode.

13. A system as claimed in any of claims 10-12, further comprising a modelling unit operable to determine a distortion model for the transmission channel, which distortion model relates to channel distortion at different transmission modes.

14. A system as claimed in claim 13, wherein the distortion model for the transmission channel uses mean square error values between original and received data values.

15. A system as claimed in claim 14, wherein the distortion model includes estimates of encoding distortion, and channel distortion.

16. A system as claimed in any one of claims 10-15, wherein the transmitted data is multicast data and includes any or any combination of multimedia data and/or video data.

FIG. 1

EP 2 814 194 A1

FIG. 2

FIG. 3

**44**

**444**
Feedback
k Server

**442**
QoS
Extraction

**24**

**26**

**40**
Multicast
Client

**420**
re-insert
/extract
data

**422** Cross
Packet FEC
buffering and
decoding

**424**
Client based
UDP Server

**426**
Video
Decoder and
Display

**428**
Local
Video Overlay

**42**

**462** Data
Carousel:
Buffer and Cross
Packet Decoder

**464**
Refresh
Local Database
and File System

**46**

**48**
Local
Application

FIG. 4

EP 2 814 194 A1

FEC encode

| 1 |
|---|
| 2 |
| : |
| : |
| k |
| 1 |
| : |
| (n-k) |

k source packets

(n-k) repair packets

FEC code rate = k/n

Transmission

| 1 |
|---|
| 2 |

Lost packet

| : |
|---|
| k |

Lost packet

| : |
|---|
| (n-k) |

At least k packets received

FEC decode

| 1 |
|---|
| 2 |
| : |
| : |
| k |

FIG. 5

FIG. 6

100 — Estimate channel state for first transmission mode

102 — Estimate distortion for first transmission mode

104 — Estimate channel state for second transmission mode

106 — Estimate distortion for second transmission mode

108 — Detirmine lowest distortion value

110 — Select mode having lowest distortion value

112 — Transmit data using selected mode

FIG. 7

FIG. 8

EP 2 814 194 A1

FIG. 9

EP 2 814 194 A1

| 626 |
| Rx. In-band Media streams |

| 628 |
| Rx. Out-of-band configuration data |

| 636 |
| TS insert |

| 634 |
| Format Data |

*632*

| 638 |
| MPEG2 TS Demux |

| 640a |
| Media decode |

| 640v |
| Media decode |

*630*

FIG. 10

FIG. 11

FIG. 12

EP 2 814 194 A1

_C_

| _E_ Video Encoder | _F_ Container Format Mux | _G_ Transmitter |

_D_

| _H_ Receiver | _I_ Format Demux | _J_ Video Decoder |

**FIG. 13A**

_B_

_832_

| _840_ H.264 Encoder | _842_ Mpeg2 TS Muxer | _844_ Delivery Protocol | _846_ Transmitter |

_834_

| _850_ Receiver | _852_ Delivery Protocol | _854_ Mpeg2 TS Demuxer | _856_ H.264 Decoder |

_830_

**FIG. 13B**

*860*

862
input raw
data

864
compress
data to
bitstream

866
slice
video
bitstream

868
encapsulate
slices to
NALUS

870
packetise
NALUS
to PES

872
packetise
PES into
TS

874
encapsulate
TS to DP
packets

876
encapsulate
DP packets
to NPPDUs

FIG. 14

878
transmit
NPPDUs

Europäisches
Patentamt

European
Patent Office

Office européen
des brevets

**EUROPEAN SEARCH REPORT**

Application Number

EP 14 17 9538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINBO QIU ET AL: "An Adaptive Cross-Layer Video Transmission Scheme Over Wireless Channels", INTELLIGENT SIGNAL PROCESSING AND COMMUNICATION SYSTEMS, 2005. ISPACS 2005. PROCEEDINGS OF 2005 INTERNATIONAL SYMPOSIUM ON HONG KONG 13-16 DEC. 2005, PISCATAWAY, NJ, USA,IEEE, 13 December 2005 (2005-12-13), pages 721-724, XP010894701, ISBN: 978-0-7803-9266-3 * section 2.1 * * section 2.2 * * section 2.3 * * figure 1 * * table 1 * ----- | 1-6,8-15 | INV. H04L1/00 H04N21/2383 H04N21/637 H04N21/6405 ADD. H04N21/24 H04N21/236 H04N21/2365 H04N21/2389 H04N21/266 H04N21/262 H04N21/2662 H04N21/414 H04N21/434 H04N21/438 |
| X | WO 2007/073362 A1 (THOMSON LICENSING [FR]; HAN LIQIAO [US]; LIU HANG [US]; RAMASWAMY KUMA) 28 June 2007 (2007-06-28) * page 1, line 15 - page 3, line 15 * * page 8, line 12 - page 9, line 18 * * figures 1-4 * ----- | 1-4, 7-13,16 | H04N21/4385 |
| A | EP 2 152 028 A1 (NOKIA SIEMENS NETWORKS OY [FI]) 10 February 2010 (2010-02-10) * abstract * ----- | 1-16 | TECHNICAL FIELDS SEARCHED (IPC) H04L H04N |
| A | US 2008/064425 A1 (KIM YONG-GYOO [KR] ET AL) 13 March 2008 (2008-03-13) * abstract * ----- | 1-16 | |
| A | WO 2007/070056 A1 (THOMSON LICENSING [FR]; LIU ZHENGYE [US]; LIU HANG [US]; WANG YAO [US]) 21 June 2007 (2007-06-21) * abstract * ----- | 1-16 | |

-/--

The present search report has been drawn up for all claims

| Place of search | Date of completion of the search | Examiner |
|---|---|---|
| The Hague | 6 November 2014 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 17 9538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FALLAH Y P ET AL: "A Link Adaptation Scheme for Efficient Transmission of H.264 Scalable Video Over Multirate WLANs", IEEE TRANSACTIONS ON CIRCUITS AND SYSTEMS FOR VIDEO TECHNOLOGY, IEEE SERVICE CENTER, PISCATAWAY, NJ, US, vol. 18, no. 7, 1 July 2008 (2008-07-01), pages 875-887, XP011225648, ISSN: 1051-8215, DOI: 10.1109/TCSVT.2008.920745 * abstract * ----- | 1-16 | H04N21/475 H04N21/61 H04N21/63 H04N21/6375 H04N21/6547 H04N21/84 H04N21/845 |

TECHNICAL FIELDS
SEARCHED (IPC)

The present search report has been drawn up for all claims

| Place of search | Date of completion of the search | Examiner |
|---|---|---|
| The Hague | 6 November 2014 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 17 9538

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2014

| Patent document cited in search report | | Publication date | Patent family member(s) | | Publication date |
|---|---|---|---|---|---|
| WO 2007073362 | A1 | 28-06-2007 | BR | PI0520491 A2 | 12-05-2009 |
| | | | CN | 101253771 A | 27-08-2008 |
| | | | EP | 1920608 A1 | 14-05-2008 |
| | | | JP | 4934139 B2 | 16-05-2012 |
| | | | JP | 2009506713 A | 12-02-2009 |
| | | | US | 2009219990 A1 | 03-09-2009 |
| | | | WO | 2007073362 A1 | 28-06-2007 |
| EP 2152028 | A1 | 10-02-2010 | EP | 2152028 A1 | 10-02-2010 |
| | | | EP | 2314083 A1 | 27-04-2011 |
| | | | US | 2011134790 A1 | 09-06-2011 |
| | | | WO | 2010015546 A1 | 11-02-2010 |
| US 2008064425 | A1 | 13-03-2008 | KR | 20080023535 A | 14-03-2008 |
| | | | US | 2008064425 A1 | 13-03-2008 |
| WO 2007070056 | A1 | 21-06-2007 | US | 2010226262 A1 | 09-09-2010 |
| | | | US | 2012093017 A1 | 19-04-2012 |
| | | | WO | 2007070056 A1 | 21-06-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. RANE ; B. GIROD.** Analysis of Error-Resilient Video Transmission Based on Systematic Source Channel Coding. *Picture Coding Symposium 2004,* 2004

- **P. 5 FERRÉ ; D. AGRAFIOTIS ; D. BULL.** Macroblock Selection Algorithms for Error Resilient H.264 Video Wireless Transmission using Redundant Slices. *SPIE Electronic Imaging VCIP,* 2008